# EUROPÄISCHE PATENTSCHRIFT

(11) **EP 3 932 249 B1**
(45) Veröffentlichungstag und Bekanntmachung des Hinweises auf die Patenterteilung: **19.03.2025**
(21) Anmeldenummer: 21182857.9
(22) Anmeldetag: 30.06.2021
(51) Int. Cl.: A45C 13/04, B62J 9/21, B62J 9/20, B65D 37/00, A45C 5/04

(54) **FAHRRADKORB ZUM BEFESTIGEN AN EINEM FAHRRAD UND VERFAHREN ZUR HERSTELLUNG EINES SOLCHEN**
BICYCLE BASKET FOR MOUNTING ON A BICYCLE AND METHOD OF MANUFACTURING THE SAME
PANIER POUR BICYCLETTE DESTINÉ À ÊTRE FIXÉ À UNE BICYCLETTE ET PROCÉDÉ DE FABRICATION D'UN TEL PANIER

(30) Priorität: 01.07.2020 DE 102020117336
(43) Veröffentlichungstag der Anmeldung: 05.01.2022
(73) Patentinhaber: Invented Here B.V., 7071 AA Ulft (NL)
(72) Erfinder: PICK, Merel, 1332 AT Almere (NL); RINGELBERG, Kornel, 1332 AT Almere (NL)
(74) Vertreter: V.O.

(56) Entgegenhaltungen:
- EP-A1- 1 873 075
- US-A1- 2006 163 249
- US-A1- 2008 053 995

## Beschreibung

Vorliegende Erfindung betrifft einen Fahrradkorb zum Befestigen an einem Fahrrad und ein Verfahren zum Herstellen eines solchen gem. den Oberbegriffen der unabhängigen Ansprüche.

Insbesondere betrifft die Erfindung einen Fahrradkorb zum Befestigen an einem Fahrrad oder dergleichen Fortbewegungsmittel, umfassend einen Unterrand, einen Boden und eine Mehrzahl an Seitenwänden, die zusammen einen Aufnahmeraum, mit einem insbesondere freien Oberrad definieren, zur Aufnahme von Gepäck, wobei der Fahrradkorb Folgendes umfasst: ein oberes Ringelement, das wenigstens teilweise entlang des Oberrands verläuft, ein unteres Ringelement, das wenigstens teilweise entlang des Unterrands verläuft, wenigstens eine Textilbahn, die unter Bildung wenigstens eines Teils der Seitenwand zwischen dem oberen Ringelement und dem unteren Ringelement verläuft, und eine Mehrzahl an Druckstabelementen, die zwischen dem oberen Ringelement und dem unteren Ringelement verlaufen.

Solche Fahrradkörbe sind aus dem Stand der Technik in unterschiedlichen Ausführungsformen bekannt. So existieren beispielsweise Fahrradkörbe, die eine formgebende drei dimensionale Drahtstruktur aus umlaufenden Drahtstäben umfassen, in die insbesondere innenseitig ein Sackelement, gebildet aus einer Mehrzahl aus Textilbahnen, eingehängt ist. Die Drahtstäbe sind meist miteinander verschweißt und bilden ein biegesteifes Gitter.

Darüber hinaus sind Fahrradkörbe bekannt, bei denen die Wände aus Drahtelementen bestehen, die aussteifend ein oberes Ringelement und ein unteres Ringelement miteinander verbinden.

Die US 2006/0163249 A1 zeigt einen zusammenlegbaren Korb mit einem Gewebekörper, einem Grundgestell und einem Einschnapprahmen. Auf beiden Seiten des Grundgestells sind Haken vorgesehen, die jeweils bewegliche Verriegelungshebel aufweisen, um das Grundgestell an der Unterseite der Innenkante des Gewebekörpers zu halten. Die Verriegelungshebel können sowohl eingeklappt und so der Korb zusammengeklappt, als auch im Einschnapprahmen verklemmt werden, um den Gewebekörper des Korbs und somit den Korb an sich aufzuspannen.

All diesen Fahrradkörben gemein sind die meist sehr voluminöse Bauart, der hohe Materialbedarf und vor allem die sehr komplexe und somit teure Herstellung.

Aufgabe der vorliegenden Erfindung ist es folglich, einen Fahrradkorb zu entwickeln, der die Nachteile der aus dem Stand der Technik bekannten Fahrradkörbe überwindet und insbesondere eine insbesondere optisch leichtere Konstruktion und eine preiswerte Herstellbarkeit erlaubt.

Diese Aufgabe wird durch einen Fahrradkorb gem. Anspruch 1 und ein Verfahren zur Herstellung eines solchen gem. Anspruch 16 gelöst.

Aus Redundanzgründen wird im Folgenden hinsichtlich des Verfahrens vollumfänglich auf Erläuterungen zum Fahrradkorb selber verwiesen und umgekehrt. Sämtliche Merkmale des Fahrradkorbs sind natürlich in die Ausbildung bzw. Durchführung des erfindungsgemäßen Verfahrens implementierbar. Selbiges gilt für Merkmale, die im Zusammenhang mit dem Verfahren genannt sind, diese sind in einem entsprechenden erfindungsgemäßen Fahrradkorb als Bauteile, Element bzw. Eigenschaft ausbildbar.

Kern der Erfindung ist unter anderem die Ausbildung des Fahrradkorbs mittels eines lösbar aufgebauten Komponentensystems, das vor allem durch die Vorspannung, eingebracht in die Textilbahn, zum Gesamtsystem zusammengehalten wird. Dadurch reduzieren sich die Herstellungskosten, da ein Großteil aufwendiger Verbindungsarbeiten, insbesondere Schweißarbeiten oder Klebearbeiten, vermieden werden kann. Vorgefertigte Einzelbauteile können platzsparend gelagert und in einer Endfertigung zum fertigen Fahrradkorb komplettiert werden. Dabei ist es denkbar, das obere Ringelement identisch zum unteren Ringelement auszuführen. Natürlich kann das obere Ringelement auch zum unteren Ringelement unterschiedlich ausgebildet werden. Der Boden ist vorzugsweise lösbar am unteren Ringelement bzw. im Bereich des unteren Ringelements angeordnet. Insbesondere ist es denkbar, dass der Fahrradkorb ohne Boden selbstaussteifend ausgebildet ist. Das bedeutet, dass der Fahrradkorb oder wenigstens Teile davon als wenigstens einem oder aber auch aus einer Mehrzahl komplettierter Bauteile vorgefertigt werden können, ohne dass der Boden eingesetzt sein muss.

Unter Vorspannung wird im Umfang der Erfindung insbesondere eine Zugkraft verstanden, die das obere Ringelement in Richtung des unteren Ringelements drängt. Darüber hinaus kann unter Vorspannung natürlich auch eine Kraft oder eine weitere Kraft verstanden werden, die insbesondere horizontal dazu verläuft.

Optional ist das untere Ringelement und/oder das obere Ringelement aus einem Strangpressprofil hergestellt. Optional bestehen das untere Ringelement und/oder das obere Ringelement aus Aluminium. Es ist aber auch denkbar, die Ringelemente aus anderen Materialien, wie beispielsweise Stahl, Kunststoff, Carbon oder dergleichen Glasfaserwerkstoffe, herzustellen. Der Boden ist vorzugsweise biegesteif ausgebildet und weist optional eine Gitterstruktur oder eine dergleichen biegesteife Ausbildung auf, beispielsweise eine oder mehrere Plattenelemente. Optional sind am Boden Befestigungselemente und insbesondere wenigstens ein Gurtelement vorgesehen, um Gepäck im Aufnahmeraum zu fixieren.

Optional besteht die Textilbahn wenigstens abschnittsweise aus Texteline oder einem dergleichen insbesondere gewobenem Kunststoffmaterial, optional aus einem insbesondere gewobenem Kunststoffmaterial aus einer Mischung aus 60 - 80% PVC und 30% - 20% Polyester, insbesondere 65% - 75% PVC und 35% - 25% Polyester, und insbesondere aus einem 1200x1200 Material und insbesondere Gewebe oder Gelege aus 70% PVC und 30% Polyester. Der aus dem Englischen übernommene Begriff Texteline ist ein Oberbegriff für synthetische Stoffe. Er wird insbesondere auch anstelle für Materialien verwendet, die auf dem Markt unter der für die Twitchell Corporation eingetragenen Marke TEXTILENE^{®} v vertrieben wird. Texteline könne auch unter der Definition hochfester Polyester -PVC-Textilien geführt werden. Optional kann Texteline- Gewebe aus einer Kunstfaser gefertigt sein, die mit PVC ummantelt wird. Das Material ist optional äußerst flexibel und zugleich stabil. Das Texteline ist optional wasserabweisend und schnelltrocknend. Beschichtungen können optional in unterschiedlichen Farben hergestellt sein. Auch können reflektierende Farben und/oder Beschichtungen zum Einsatz kommen.

Vorzugsweise ist die Textilbahn wenigstens entlang einer Achse, und insbesondere entlang einer Vertikalachse Av, die in Richtung der Vorspannung Fv verläuft, elastisch dehnbar ausgebildet. Dehnbar bedeutet optional, dass das Material aus einer Ruhestellung in eine gedehnte Stellung bzw. Spreizstellung dehnbar und sich nach Lösen einer Dehnungs- bzw. Spreizkraft wenigstens teilweise in Richtung der Ruhestellung zurückzieht. Auf diese Weise kann einer zwischen wenigstens dem oberen Ringelement und dem unteren Ringelement, aber auch zwischen anderen Elementen, beispielsweise im Folgenden genannten Verbindungselementen und/oder Druckstabelementen, eine Spannung in der resultierenden Seitenwand und so die Textilbahn insbesondere faltenfrei als Seitenwand ausgebildet und zudem eine feste Lagerung der Druckstabelemente erreicht werden.

Elastische Dehnbarkeit kann in der Textilbahn inhärent vorhanden sein, dass die Textilbahn also für sich allein elastisch ausgebildet ist, es ist optional jedoch auch oder alternativ möglich, Dehnelemente bzw. dergleichen elastische Elemente in der Textilbahn vorzusehen bzw. wenigstens zwei Textilbahnen über wenigstens ein solches Dehnelement miteinander zu verbinden, um die Elastizität zur Verfügung zu stellen. Dehnelemente können eigenständig ausgebildet oder Teil des Textilbahnmaterials und insbesondere Gewebes sein.

Optional weist das obere Ringelement und/oder das untere Ringelement wenigstens ein Textilbahnaufnahmemittel und insbesondere eine Kederschiene auf, in die die Textilbahn mit wenigstens einem Textilbahneinsatzelement und insbesondere einem mit der Textilbahn verbundenen Keder befestigbar und insbesondere darin einschiebbar ist. Das Textilbahnaufnahmemittel ist optional im jeweiligen Ringelement ausgebildet. Es kann beispielsweise als eine umlaufende Nut ausgebildet sein. Es ist an einem Seitenteil bzw. einem Seitenprofil, das optional im wesentlichen coplanar zur Vorspannkraft entlang Av verläuft des jeweiligen Ringelements oder aber optional an einem Unter- oder Oberteil des Ringelementes ausgebildet. Das Textilbahnaufnahmemittel kann integral mit dem Ringelement ausgebildet sein. Vorzugsweise ist das Textilbahneinsatzelement axial zur Haupterstreckungsachse des jeweiligen Ringelements in das Textilbahnaufnahmemittel und optional parallel zu seiner Erstreckungsrichtung und optional dieser folgend einschiebbar. Das Textilbahneinsatzelement ist optional so ausgebildet, dass es in das Textilbahnaufnahmemittel einfädelbar ist.

Optional ist das Textilbahneinsatzelement mit der Textilbahn vernäht, verklebt oder dergleichen unlösbar befestigt. Das Textilbahneinsatzelement ist vorzugsweise im Querschnitt rund oder dergleichen oval ausgebildet und insbesondere sein Querschnitt komplementär zum Querschnitt des Textilbahnaufnahmemittels ausgebildet. Optional ist das Textilbahneinsatzelement derart ausgebildet, dass es, sobald eine Vorspannung zwischen oberen und unterem Ringelement aufgebracht ist, in seinem Lagersitz, also in seiner Lagerung im Textilbahnaufnahmemittel, fixiert ist. Insbesondere ist denkbar, wenn eine axiale Verschiebbarkeit, also in Richtung der Haupterstreckungsachse des Ringelements, im Wesentlichen unterbunden wird. Auf diese Weise kann das Textilelement in dieser Richtung gespannt und in dieser Spannung gehalten werden. Eine Fixierung ist optional auch durch ein im Folgenden beschriebenes Verbindungselement möglich. Optional ist das Textilbahneinsatzelement elastisch und insbesondere um Querachsen zu seiner Haupterstreckungsachse insbesondere elastisch biegbar ausgebildet. Auf diese Weise kann es insbesondere Richtungsänderungen des Ringelements und insbesondere des Textilbahnaufnahmemittels am Ringelement, beispielsweise in Eckbereichen folgen.

Optional sind wenigstens eine Mehrzahl der Druckstabelemente zwischen dem oberen Ringelement und dem unteren Ringelement entlang wenigstens einer Achse und insbesondere entlang einer Vertikal-Achse Av, die in Richtung der Vorspannung Fv verläuft, gegen das obere Ringelement und/oder das untere Ringelement verklemmt. Druckstabelemente sind optional also aufgrund der Vorspannung normalkraftbelastet. Optional verlaufen die Druckstabelemente orthogonal in das obere Ringelement und/oder das untere Ringelement. Der orthogonale Winkel ist optional in der Ebene der jeweiligen Seitenwand ausgebildet. Das Druckstabelement kann direkt in das obere Ringelement und/oder das untere Ringelement einlaufen bzw. damit direkt gekoppelt sein, es ist aber auch möglich, ein Zwischenelement vorzusehen, dass das Druckstabelement mit dem jeweiligen Ringelement verbindet. Das Druckstabelement ist vorzugsweise ein Stab, der längsaxial starr ausgebildet ist. Vorzugsweise ist der Druckstab derart ausgebildet, dass ein Knicken des Druckstabelements aufgrund der einwirkenden Normalkraft im Wesentlichen verhindert wird. Insbesondere im Zusammenhang mit dem im Folgenden noch beschriebenen Querelement ist es auch denkbar, eine Knickaussteifung des Druckstabelements über das Querelement auszubilden.

Die Druckstabelemente sind vorzugsweise aus demselben Material wie das obere und/oder untere Ringelement. Es ist jedoch auch möglich, die Druckstabelemente aus jedem anderen zuvor genannten Material auszubilden. Auch ist es denkbar, die Druckstabelemente selbst aus unterschiedlichen Materialien herzustellen.

Optional sind die Druckstabelemente insbesondere im Querschnitt und/oder in ihrem Material und/oder in Teilbereichen identisch zueinander ausgebildet, es ist auch möglich, unterschiedliche Druckstabelemente zur Verfügung zu stellen. Beispielsweise können Druckstabelemente weitere Funktionen übernehmen, beispielsweise Klemmfunktionen, um die Textilbahn einzuklemmen, Aufnahmefunktionen für weitere Elemente, wie beispielsweise Beleuchtungen, Schlosselemente, Verschlusselemente, Verbindungselemente, zur Verbindung einzelner Komponenten des Fahrradkorbs etc.

Optional ist wenigstens ein Druckstabelement mit dem oberen Ringelement und/oder mit dem unteren Ringelement über eine lösbare Steckverbindung kraftgekoppelt. Das Druckstabelement wird vorzugsweise also in das obere Ringelement und/oder das untere Ringelement eingeschoben und so in einem Lagersitz gelagert. Die Kraftkopplung ist vorzugsweise derart lösbar, dass ohne einwirkende Vorspannung das Druckstabelement aus seinem Lagersitz entfernt werden kann. Es ist auch denkbar, den Lagersitz derart auszubilden, dass eine temporäre Halterung des Druckstabelements am und insbesondere im oberen Ringelement und/oder unteren Ringelement zur Verfügung gestellt wird, um beispielsweise beim Zusammenbau des Fahrradkorbs das bzw. die Druckstabelemente temporär zu halten, um weitere Elemente, beispielsweise die jeweiligen Ringelemente zuzufügen.

Erfindungsgemäß weist wenigstens ein Druckstabelement wenigstens ein Lagerelement auf, optional ausgebildet an wenigstens einem freien Ende und insbesondere an zwei sich gegenüberliegenden freien Enden, das mit wenigstens einem Gegenlagerelement, das am oberen Ringelement und/oder am unteren Ringelement ausgebildet ist, in lösbarer Kraftkopplung steht. Ein resultierender Lagersitz zwischen Lagerelement und Lagergegenelement ist vorzugsweise ein Normalkraftlager. Es ist auch möglich, den resultierenden Lagersitz als biegesteifen Lagersitz auszuführen und insbesondere den biegesteifen Lagersitz um ein Moment, was aus einem Verbiegen wenigstens eines Druckstabelements in Richtung der Haupterstreckungsachse des jeweiligen Ringelements resultiert.

Zudem weist das Lagerelement wenigstens einen Fortsatz auf, und das Gegenlagerelement wenigstens eine Fortsatzaufnahme, oder umgekehrt, wobei der Fortsatz unter Bildung einer Steckverbindung in die Fortsatzaufnahme einsteckbar ist. Generell kann der Lagersitz mittels einer Steckverbindung hergestellt werden. Der Fortsatz weist beispielsweise einen umlaufenden Flansch oder dergleichen Lagerabsatz auf, der unter Normalkraftableitung in eine Flanschaufnahme an der Fortsatzaufnahme des Ringelements ausgebildet ist. Die Fortsatzaufnahme kann eine in Richtung der Vorspannung verlaufende umlaufende Seitenwand aufweisen, an der der Fortsatz mit einer entsprechenden Seitenwand unter Ausbildung eines biegesteifen Lagersitzes ansteht. Auch ist es möglich, den Fortsatz derart auszubilden, dass er stirnseitig gegen eine komplementäre Wand an der Fortsatzaufnahme ansteht und so Normalkräfte ableitet. Auch ist es denkbar, die Fortsatzaufnahme derart auszubilden, dass sie am Ringelement eine obere Öffnung für den Fortsatz und eine untere Öffnung für den Fortsatz aufweist, sodass der Fortsatz an einem unteren Ende und an einem oberen Ende gehalten und insbesondere biegesteif gehalten ist.

Wie zuvor schon erwähnt, ist optional die Kraftkopplung und insbesondere eine Steckverbindung zwischen Druckstabelement und dem oberen Ringelement biegesteif ausgebildet. Optional sind wenigstens zwei Druckstabelemente unter Bildung eines statischen Rahmens mit wenigstens einem Querelement miteinander verbunden. Unter einem statischen Rahmen wird eine Konstruktion verstanden, über die eine Aussteifung insbesondere in der durch die zwei Druckstabelemente und das Querelement gebildeten Ebene erreicht wird. Ein Rahmen wird hier insbesondere durch biegesteife Eckverbindungen zwischen Druckstabelement und Querstabelement ausgebildet. Das Querelement ist optional insbesondere von wenigstens einem freien Ende der Druckstabelemente beabstandet am jeweiligen Druckstabelement angeordnet und insbesondere im Bereich eines Mittelteils des jeweiligen Druckstabelements angeordnet. Das Querelement ist optional biegesteif mit wenigstens einem der Druckstabelemente verbunden. Natürlich ist es möglich, eine Mehrzahl an Querelementen vorzusehen, und insbesondere die Querelemente auch untereinander über entsprechend verlaufende Aussteifungselemente relativ zueinander auszusteifen.

Optional sind wenigstens zwei Druckstabelemente, die entlang unterschiedlicher Seitenwände verlaufen und insbesondere Seitenwänden verlaufen, deren Erstreckungsebenen sich schneiden, unter Bildung eines dreiaxial aussteifenden statischen Rahmens über Querelemente miteinander verbunden. Die Querelemente sind insbesondere in diesem Zusammenhang vorzugsweise gebogen ausgebildet. Die Druckstabelemente könnten beispielsweise in wenigstens einer Stirnseitenwand und wenigstens einer Seitenwand des Fahrradkorbs ausgebildet sein, wobei die Querelemente die Druckstabelemente miteinander verbinden. Die Querelemente sind vorzugsweise so ausgebildet, dass sie die Außenform des Fahrradkorbs definieren. Insbesondere sind die Querelemente vorzugsweise in einer Draufsicht auf den Fahrradkorb gebogen ausgeführt, um insbesondere die Eckbereiche des Fahrradkorbs zu definieren.

Grundsätzlich können die Druckstabelemente so ausgebildet sein, dass sie ein Auflager für die Textilbahnen zur Verfügung stellen und insbesondere die Außenform des Fahrradkorbs wenigstens abschnittsweise definieren. Die Druckstabelemente sind vorzugsweise so ausgebildet, dass die Textilbahn daran anliegt. Insbesondere ist es möglich, die Druckstabelemente geringfügig gebogen auszuführen, um ein Anliegen der Textilbahn am Druckstabelement zur Verfügung zu stellen. Insbesondere in diesem Zusammenhang sind die Druckstabelemente in ihrem Lagersitz vorzugsweise orthogonal zur resultierenden Seitenwand nach außen, also vom Aufnahmeraum des Fahrradkorbs weg gebogen bzw. optional in Richtung der textilbahn gebogen. Die Biegung fasst optional einen Stich insbesondere im mittleren Teil des Druckstabelements von 0,1-5,0 %, optional 1,0 -3,0 % der Länge des jeweiligen Druckstabelements. Die Biegung umfasst optional einen Stich von 1 - 10 mm, optional 3-7 mm.

Optional ist die durch das untere Ringelement umschlossene Bodenfläche P_{A} kleiner als die vom oberen Ringelement umschlossene Deckfläche P_{D}. Optional verringert sich der Aufnahmeraum über die Höhe des Fahrradkorbs und insbesondere von oben nach unten. Optional ist es denkbar, dass der Oberrand insbesondere in einem Teilbereich abgewinkelt zum restlichen Oberrand verläuft. Eine solche Abwinklung, die auch als Phase bezeichnet werden kann, verläuft optional in einem Teilbereich, der beim Fahrradkorb im montierten Zustand auf dem Fahrrad in Richtung eines Sattels verweist. Insbesondere ist diese Abwinklung derart ausgebildet, dass bei einem für einen Standardbenutzer eingestellten Sattel der Teilbereich des abgewinkelten Oberrands und insbesondere ein im Bereich der Stirnseite ausgebildeten derart abgewinkelt ist, dass er unter einen Sattel positionierbar ist. In einer Seitenansicht verläuft diese Abwinklung optional in einem Winkel zur Vertikalen, weiter optional zur Achse Av und insbesondere in einem Winkel zu wenigstens einem Druckstabelement von 10,0-60,0, vorzugsweise 30,0-50,0°. Diese Definition betrifft den zwischen der Vertikalen und dem abgewinkelten Oberrand eingeschlossenen Winkel.

Es ist denkbar, den Fahrradkorb aus wenigstens zwei, insbesondere sich selbst aussteifenden Halbschalen auszubilden, die mittels wenigstens eines Verbindungselements, unter Bildung des Aufnahmeraums miteinander verbunden bzw. verbindbar sind. Der Fahrradkorb wird also derart ausgebildet, dass zwei im Wesentlichen komplettierte Halbschalen insbesondere gegenüber angeordnet werden können und über wenigstens ein Verbindungselement miteinander verbindbar sind.

Insbesondere in diesem Zusammenhang ist es denkbar, dass das obere Ringelement und/oder das untere Ringelement aus mehreren, insbesondere aus zwei Teilringelementen, hergestellt sind. Diese Teilringelemente sind optional zueinander axialsymmetrisch ausgebildet. Die Symmetrieachse verläuft vorzugsweise entlang der Haupterstreckungsachse des Fahrradkorbs und insbesondere einer Längsachse. Der Vorteil der Abwinklung und insbesondere der Ausbildung der mehrteiligen Ringelemente liegt darin, dass auf diese Weise eine gleichmäßig gespannte Textilbahn zwischen oberem Ringelement und unteren Ringelement und insbesondere in die zuvor definierten Textilbahnaufnahmemittel eingebracht werden kann. Symmetrisch bedingt ist dies durch die mehrteilige Ausführbarkeit bzw. Halbschalenausführbarkeit des Fahrradkorbs zuverlässiger und insbesondere qualitativ besser möglich als bei einem einteilig ausgebildeten Ringelement. Es ist aber auch denkbar, das obere und/oder das untere Ringelement einteilig auszuführen. Dies ist insbesondere bei einem Fahrradkorb der Fall, dessen oberes Ringelement und/oder unteres Ringelement in einer Ebene verlaufend ausgebildet, also nicht abgewinkelt oder nur geringfügig abgewinkelt, beispielsweise um einen Winkel geringer 10,0° abgewinkelt ausgebildet, ist.

Eine solche Ausführungsform ist eigenständig und unabhängig von den hierin genannten Ausführungsformen und insbesondere der Halbschalenausführungsform anwendbar. Sie profitiert insbesondere durch die lösbare Lagerung der Druckstabelemente und die somit resultierende einfache Komplettierbarkeit.

Die Verbindungselemente sind optional als Klemmelemente ausgebildet, die die Teilringelemente und/oder die Halbschalen und/oder einzelne Teile des Fahrradkorbs miteinander fixieren und insbesondere klemmfixieren. Hier sind beispielsweise zwei komplementär zueinander ausgebildete Schalen verwendbar, die über Befestigungsmittel und insbesondere Schrauben relativ zueinander unter Festklemmen oder dergleichen weitere Elemente gegeneinander fixierbar sind. Die Verbindungselemente können als Druckstabelemente ausgebildet sein bzw. als solche fungieren. Es ist auch denkbar, dass die Verbindungselemente Druckstabelemente umfassen und sich daran fixieren. Es ist denkbar, die Verbindungselemente derart auszuführen, dass eine biegesteife Verbindung zwischen den Teilringelementen zur Verfügung gestellt wird. Auch ist es denkbar, die Verbindungselemente als statisch wirksame Rahmen auszubilden, und insbesondere in der Ebene wenigstens einer Seitenwand statisch aussteifend auszubilden.

Zudem ist es denkbar, in die Verbindungselemente Aufnahmeelemente für weitere Bauteile des Fahrradkorbs, beispielsweise Reflektoren, Beleuchtungselemente, Schlösser, Diebstahlsicherungen oder dergleichen, auszubilden. Beispielsweise kann ein Aufnahmeraum zur Verfügung gestellt werden, in den ein Beleuchtungselement insbesondere lösbar anordbar ist. Vorzugsweise umfasst das Verbindungselement optional auf einer ersten Seite einen Aufnahmeraum für ein solches Element und optional auf einer zweiten, insbesondere gegenüberliegenden Seite eine Öffnung, über der dieses Element sichtbar ist. Dies hat insbesondere bei einem Beleuchtungselement einen positiven Effekt.

Es sei erwähnt, dass das Verbindungselement nicht auf die hier offenbarte Ausführungsform eines Fahrradkorbes festgelegt, sondern mit jeder Art von Korb verwendet werden kann. Das Verbindungselement ist insbesondere auch in den hier beiliegenden Zeichnungen offenbart, wobei eine Kombination den dargestellten Fahrradkörben nicht zwingend erforderlich ist. Das Verbindungselement ist insbesondere als Element zum Verbinden und insbesondere Festlegen des Zusatzelementes am Fahrradkorb ausgebildet. Das Verbindungselement ist optional an dem Fahrradkorb festlegbar und zur Aufnahme eines Zusatzelementes, beispielsweise einer Beleuchtung, Reflektormitteln, Schlossmitteln, Diebstahlsicherungsmitteln, Batteriemitteln etc. ausgebildet. Es ist optional derart ausgebildet, dass es an wenigstens einem Druckstabelement und/oder Querelement und/oder dem oberen und/oder unteren Ringelement festlegbar ist. Es ist optional Mehrteilig ausgebildet und optional von einer Innenseite und einer Außenseite an wenigstens einer Wandung des Fahrradkorbes anordbar. Es ist optional derart mehrteilig das die mehreren Teile, insbesondere einen Innenteil und ein Außenteil miteinander unter Festlegung am Fahrradkorb miteinander verbindbar sind. Das Verbindungselement ist optional an den Fahrradkorb anklickbar. Es ist optional derart ausgebildet, dass es ein Spannelement, beispielsweise Spannvorsprünge aufweist, zum Spannen der Textilbahn aufweist.

Optional ist das Verbindungsmittel mehrteilig, so dass es unter Kopplung der einzelnen Teile eine Klemmsicherung bildet, über das es am Fahrradkorb festlegbar ist. Die Kopplung erfolgt optional über einen Klickverschluss, ein Schraubverbindung, eine Klebeverbindung. Insbesondere ist die Kopplung lösbar, Optional ist das Verbindungselement so ausgebildet, dass es auch an einem bestehendem und insbesondere an einem Fahrrad montierten Fahrradkorb montierbar ist.

Optional weist der Fahrradkorb wenigstens ein Tragebügelelement auf, das insbesondere am oberen Ringelement befestigbar ist. Das Tragebügelelement verbindet optional wenigstens zwei und insbesondere zueinander axialsymmetrisch ausgebildete Teilringelemente insbesondere des oberen Ringelements und/oder des unteren Ringelements und/oder wenigstens zwei Halbschalen. Insbesondere kann die Verbindung derart ausgebildet sein, dass auch hier eine statische Aussteifung zwischen den Teilringelementen und insbesondere in Ergänzung zur statischen Aussteifung durch das Verbindungselement erreicht wird. Das Tragebügelelement verläuft optional in einer Haupterstreckungsrichtung orthogonal zur Symmetrieachse der Teilringelemente bzw. einer Achse, die zwischen den Trennungsbereichen der Teilringelemente verläuft. Optional ist das Tragebügelelement insbesondere entlang seiner Haupterstreckungsachse biegesteif ausgebildet. Das Tragebügelelement weist vorzugsweise eine u- oder dergleichen gebogene Form auf.

Wie bereits eingangs erläutert, umfasst die Erfindung auch ein Verfahren zum Herstellen eines Fahrradkorbs, gekennzeichnet durch die oben genannten Schritte und darüber hinaus optional durch Schritte, die in Verbindung mit den hierin genannten Merkmalen des Fahrradkorbs ausführbar bzw. anwendbar sind.

Das genannte Spreizmittel zur Aufbringung einer Spreizkraft kann beispielsweise eine Schraubzwinge oder dergleichen Spreizmittel sein, das zwischen oberem Ringelement und unterem Ringelement oder dergleichen mit diesen Kraftkopplung stehenden Elementen eingesetzt und unter Aufbringung der Spreizkraft zwischen diesen Ringelementen derart verklemmbar ist, dass das obere Ringelement relativ zum unteren Ringelement auseinandergedrückt wird und/oder das ein (Spreiz-) Spannung in der Textilbahn erzeugt wird. Durch dieses Auseinanderdrücken wird eine Vorspannung und insbesondere die Spreizvorspannung in die Textilbahn eingebracht, die nach Lösen des Spreizelements ein Zurückdrängen des oberen Ringelements relativ zum unteren Ringelement bewirkt und so eine Fixierung der Druckstabelemente in ihrem jeweiligen Lagersitz zur Folge hat. Es sei erwähnt, dass es ausreicht, wenn nur eine Teilmenge der Druckstabelemente normalkraftbelastet, sobald sie zwischen dem oberen Ringelement und dem unteren Ringelement eingeklemmt sind. Andere Teilmengen der Druckstabelemente können beispielsweise mit geringer oder keiner Normalkraftbelastung in ihrem Lagersitz gehalten sein. Dies ist insbesondere im Zusammenhang mit der zuvor genannten Temporärhalterung der Druckstabelemente in ihrem Lagersitz denkbar, sodass ein Klappern dieser nicht normalkraft- oder nur gering normalkraftbelasteten Druckstabelemente verhindert wird. Eine Teilmenge der Druckstabelemente ist optional so ausgebildet, dass sie das untere und obere Ringelement im festgeklemmten Zustand in einem Sollabstand zueinander halten. Die Druckstabelemente können in einem Reibschluss in ihrem Lagersitz am oberen Ringelement und/oder unteren Ringelement insbesondere axial gehalten sein.

Auch ist es denkbar, am Ringelement und/oder an wenigstens einem Druckstabelement wenigstens ein Spannelement auszubilden. Das Spannelement kann als Spreizelement ausgebildet sein. Es kann so ausgebildet sein, dass es eine Vorspannung in die Textilbahn nach dem Einsetzten der Druckstabelement in ihren Lagersitz erlaubt. Ein solches Spannelement kann beispielswiese ein Längenverlängerungsmittel des Druckstabelementes sein, über den der Druckstab in seinem Lagersitz zwischen den Ringelementen verlängert und/oder verklemmbar ist. Ein solches Spannelement kann zum Beispiel eine Schraub-Mutter umfassen, die auf einem Gewinde am Druckelement gegen wenigstens eines der Ringelemente unter Aufbringen der Vorspannung gepresst werden kann. Auch kann der Druckstab mehrteilig, insbesondere scharnierbar ausgebildet und unter Aufbringen der Vorspannung in eine Lagerposition beispielswiese ausgeklappt werden. Auch kann das Druckstabelement teleskopierbar ausgebildet sein.

Optional sind das wenigstens eine Tragebügelelement komplementär zum insbesondere oberen Ringelement ausgebildet, sodass sie der Form dieses Ringelements folgen. Es ist denkbar, am Ringelement eine Halterung vorzusehen, in der das Tragebügelelement fixierbar und insbesondere klemmfixierbar ist. Auf diese Weise wird ein Klappern des Tragebügelelements verhindert.

Die Fahrradkörbe sind vorzugsweise derart ausgebildet, dass sie zueinander stapelbar sind. Dies reduziert den Lagerbedarf fertig komplettierter Fahrradkörbe.

Es ist denkbar, entsprechende Haltevorrichtungen am Boden und/oder am unteren Ringelement und/oder am oberen Ringelement und/oder an Druckstabelemente und/oder am Verbindungselement vorzusehen, um den Fahrradkorb am Fahrrad zu befestigen. Hier können beispielsweise Halterungen zum Befestigen auf einem Gepäckträger, auf einem Frontträger, an einem Lenkrad oder dergleichen Bauteile des Fahrrads vorgesehen sein.

Weitere Ausführungsformen der Erfindung ergeben sich aus den Unteransprüchen.

Im Folgenden wird die Erfindung anhand von Ausführungsbeispielen beschrieben, die durch die beiliegenden Zeichnungen näher erläutert werden. Hierbei zeigen schematisch:
- Fig. 1: eine isometrische Darstellung einer Ausführungsform des erfindungsgemäßen Fahrradkorbs;
- Figs. 2, 3: je eine isometrische Darstellung des Fahrradkorbs gem. Fig. 1 ohne Textilbahn;
- Fig. 4: eine Explosionsdarstellung der Ausführungsform gem. Fig. 1;
- Fig. 5: eine Seitenansicht der Textilbahn gem. Fig. 1;
- Fig. 6: eine schematische Darstellung der Fassung zwischen Textilbahn und Fahrradkorb gem. Fig. 3;
- Fig. 7: ein Detail der Textilbahnfixierung gem. Fig. 6;
- Fig. 8: einen Querschnitt durch die Ausführungsform gem. Fig. 1;
- Figs. 9, 10: Detailansichten des Boden-Eckbereichs gem. Fig. 8;
- Fig. 11: eine isometrische Detailansicht von Druckstab- und Querelementen gem. Fig. 8;
- Fig. 12: einen Detailschnitt der Ausführungsform gem. Fig. 8 in einer Druckstabelement-Halteposition POS_{H}
- Fig. 13: eine Detailansicht, wie in Fig. 12 vermerkt;
- Fig. 14: die Ausführungsform gem. Fig. 12 in einer Druckstabelement-Einsetzposition POS_{E};
- Figs. 15, 16: isometrische Teildarstellungen von Halbschalen der Ausführungsform gem. Fig. 2;
- Fig. 17: einen Horizontalschnitt der Ausführungsform gem. Fig. 2;
- Figs. 18- 23: isometrische Detailansichten von Verbindungselementen;
- Fig. 24: eine isometrische Darstellung einer weiteren Ausführungsform des erfindungsgemäßen Fahrradkorbs;
- Fig. 25: eine weitere Ausführungsform einer Textilbahnbefestigung;
- Fig. 26: verschiedene Ausführungen von Befestigungen von Textilbahnen; und
- Fig. 27 - 30: weitere Ausführungsformen von Fahrradkörben.

Im Folgenden werden für gleiche und gleichwirkende Bauteile dieselben Bezugsziffern verwendet, wobei bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

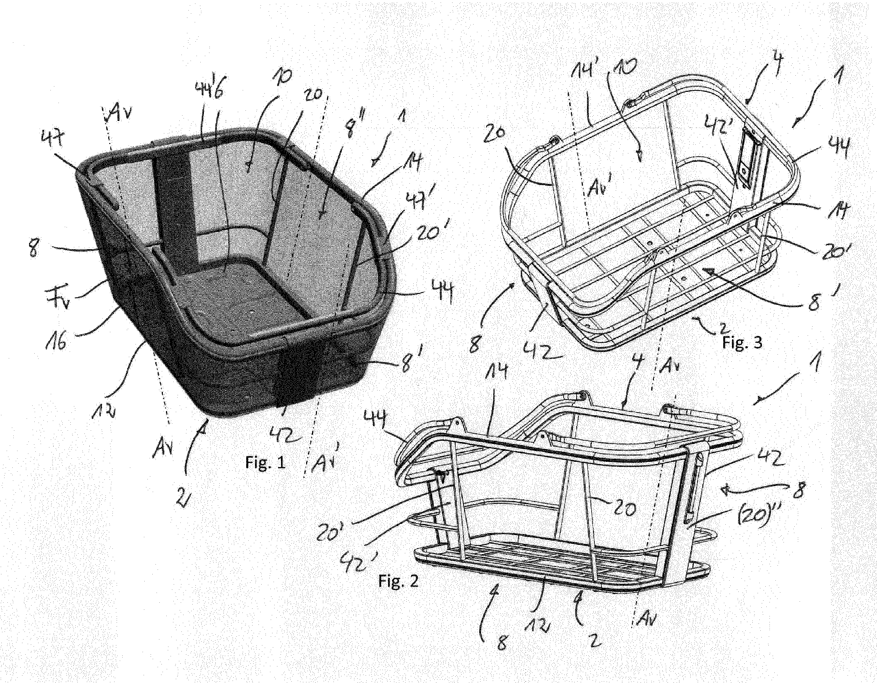

Die Figs. 1 bis 3 zeigen isometrische Darstellungen einer Ausführungsform des erfindungsgemäßen Fahrradkorbs 1. In Fig. 1 ist dieser Fahrradkorb 1 in einer optional vollständigen Ausführungsform und insbesondere umfassend eine Textilbahn 16 dargestellt, in den Figs. 2 und 3 ist der Fahrradkorb 1 lediglich mit seiner Unterkonstruktion und insbesondere ohne diese Textilbahn 16 dargestellt.

Der Fahrradkorb umfasst einen Unterrand 2, einen Boden 6 und eine Mehrzahl an Seitenwänden 8, die zusammen einen Aufnahmeraum 10 mit einem insbesondere freien Oberrand definieren. Dieser Aufnahmeraum kann zur Aufnahme von Gepäck verwendet werden. In Fig. 1 ist der Boden der Ausführungsform als durchgehende Platte dargestellt. Es ist möglich, diese Platte insbesondere mit einer Gitterstruktur, wie in Fig. 2 dargestellt, mit und ohne Abdeckung, als Netzelement oder als vollflächige Platte auszuführen. Optional ist dieser Boden am Unterrand befestigt, wie im Folgenden noch im Detail beschrieben.

Der Fahrradkorb umfasst weiter ein oberes Ringelement 14, das wenigstens teilweise entlang des Oberrands 4 verläuft, ein unteres Ringelement 12, das wenigstens teilweise entlang des Unterrands 2 verläuft und wenigstens eine Textilbahn 16, die unter Bildung wenigstens eines Teils der Seitenwand 8 zwischen dem oberen Ringelement 14 und dem unteren Ringelement verläuft. Zwischen den Ringelementen sind eine Mehrzahl an Druckstabelemente 20 angeordnet, die zwischen dem oberen Ringelement und dem unteren Ringelement verlaufen. Die Druckstabelemente 20 können direkt mit den Ringelementen 12, 14 verbunden sein, sie können aber auch über Zwischenelemente mit diesen kraftgekoppelt werden.

Es sei darauf hingewiesen, dass diese Ausführungsformen hier rein exemplarisch beschrieben sind. Insbesondere sei angemerkt, dass sämtliche insbesondere im einleitenden Teil dieses Schriftsatzes offenbarten Merkmale mit diesen Ausführungsformen kombiniert bzw. an diesen Ausführungsformen ausgeführt werden können. Es sei weiter angemerkt, dass sämtliche Merkmale für sich alleine oder in Kombination verwendet werden können, außer es ist explizit auf einen entsprechenden Verbund hingewiesen.

Insbesondere in Fig. 1 dargestellt, ist die Textilbahn 16 zwischen dem oberen Ringelement 14 und dem unteren Ringelement 12 aufgespannt, sodass sie das obere Ringelement gegen das untere Ringelement auf Vorspannung bringt. Dazu sind Druckstabelemente 20 vorgesehen, die jeweils am oberen Ringelement 14 und im unteren Ringelement 12 lösbar gelagert sind und durch die Vorspannung Fv in ihrem Lagersitz gehalten sind. Die entsprechenden Lagerpunkte der Druckstabelemente sind dabei vorzugsweise so ausgebildet, dass das Textilelement gedehnt wird, sobald die Druckstabelemente zwischen dem unteren Ringelement und dem oberen Ringelement eingesetzt sind. Optional sind die Druckstabelemente länger ausgebildet als der Abstand zwischen dem unteren Ringelement und dem oberen Ringelement, in einem Zustand, in dem die Textilbahn nicht vorgespannt, ist.

Die Textilbahn, die vorzugsweise wenigstens abschnittsweise aus Textilen besteht, ist wenigstens entlang einer Achse, und insbesondere entlang der Vertikal-Achse Av, in Richtung der Vorspannung Fv elastisch dehnbar ausgebildet. Auch ist es denkbar, die Textilbahn bi-elastisch auszuführen, sodass nicht nur eine Vorspannung entlang der Achse Av erreichbar ist, sondern auch eine Vorspannung insbesondere orthogonal dazu und in Richtung der Haupterstreckungsrichtung (am jeweiligen Bereich der Textilbahn) wenigstens eines Ringelements.

Wie insbesondere auch in den Figs. 1 bis 3 dargestellt, weist der Fahrradkorb wenigstens ein Tragebügelelement 44 auf, das hier optional komplementär zum oberen Ringelement 14 ausgebildet ist und insbesondere dessen Form folgt. Über wenigstens eine Lagerklemme 47 oder dergleichen Fixiermittel ist das Tragebügelelement 44 optional fest am Oberrand 4 des Fahrradkorbs 1 gehalten. Weiter dargestellt ist in den Figs. 1 bis 3 wenigstens ein Verbindungselement 42, das hier zwischen dem oberen Ringelement 14 und dem unteren Ringelement 12 verläuft und, wie im Folgenden noch im Detail beschrieben, eine Verbindung einzelner Bauteile des Fahrradkorbs 1 zur Verfügung stellt. Dieses Verbindungselement kann auch als Druckstabelement 20" ausgebildet sein, wie optional in Fig. 2 dargestellt.

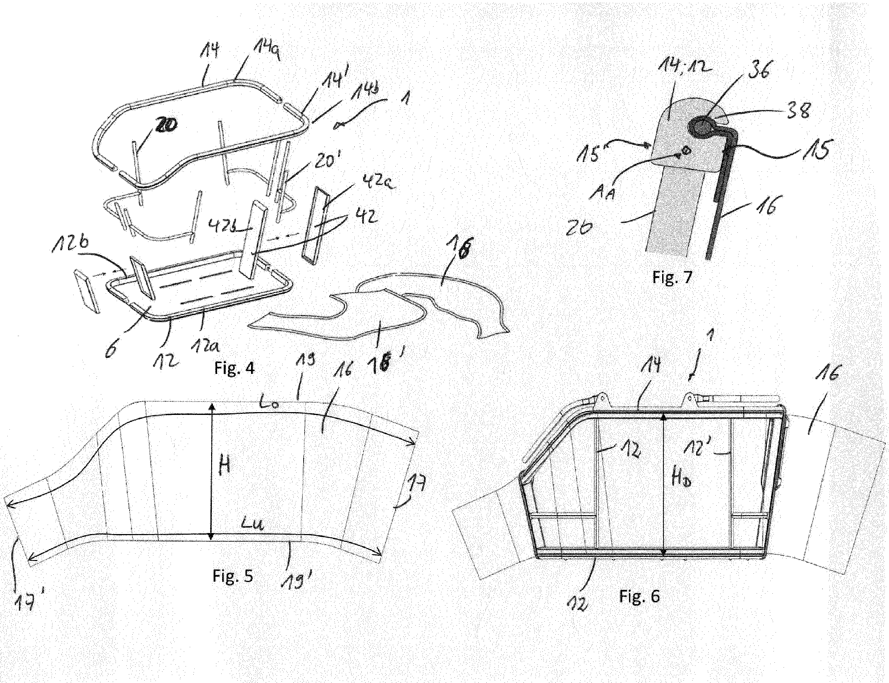

Fig. 4 zeigt eine Explosionsdarstellung des Fahrradkorbs gem. Fig. 1, wobei die Einzelteile, wie sie in den Figs. 1 bis 3 dargestellt sind, noch einmal gezeigt sind. Zusätzlich ist in Fig. 4 eine mehrteilige Ausführungsform des oberen Ringelements 14 und des unteren Ringelements 12 gezeigt. Die jeweiligen Ringelemente 12, 14 bestehen aus zwei Teilelementen 12a, 12b; 14a, 14b, die über das zuvor erwähnte Verbindungselement 42 hier, ebenfalls optional aus zwei Teilen 42a und 42b bestehend, miteinander verbunden werden können. Dies erfolgt optional über eine Klemmverbindung, wie sie im Folgenden noch beschrieben wird.

Die Figs. 5 und 6 zeigen das in Fig. 4 und Fig. 1 dargestellte Textilelement 18 im Detail. In Fig. 6 ist erkennbar, dass das Textilelement 16 im vorgespannten Zustand im Wesentlichen der Seitenform des Fahrradkorbs 1 entspricht. Im nicht vorgespannten Zustand, und insbesondere im nicht am oberen Ringelement und/oder am unteren Ringelement befestigten Zustand weist die Textilbahn eine geringe Höhe H (siehe Fig. 5) auf. Aufgrund der aufgebrachten Vorspannung wird die Textilbahn 16, wie in Fig. 6 dargestellt, auf die Höhe H_{D} aufgedehnt, sodass sie eine Vorspannung Fv erzeugt, die das obere Ringelement 14 und das untere Ringelement 12 aufeinander zu drängt. Dies resultiert in einem Festklemmen wenigstens eines Druckstabelements 20 zwischen dem oberen Ringelement 14 und dem unteren Ringelement 12.

Optional ist die Textilbahn 16 so ausgebildet, dass sie in ihrer Längserstreckung, wie in Fig. 5 dargestellt, in ihrer unteren Länge Lu im Wesentlichen der Erstreckungslänge wenigstens eines Teilelements 12a bzw. 12b entspricht und in ihrer oberen Erstreckungslänge Lo der Erstreckungslänge eines oberen Teilelements 14 a bzw. 14b entspricht. Es ist denkbar, die Erstreckungslängen Lu; Lo geringfügig länger zu machen als die Erstreckungslängen der Teilelemente, um Endbereiche 17 der Textilbahn 16 insbesondere mit den Verbindungselementen 42 zu verklemmen und/oder um diese über die Teilelement herausstehen zu lassen und zu befestigen, zu spannen etc. Auf diese Ausführungsform wird im Folgenden noch im Detail eingegangen.

Die Oberränder bzw. Unterränder 19 der Textilbahn 16 sind optional so ausgebildet, dass sie komplementär zur räumlichen Entwicklung des oberen Ringelements 14 bzw. unteren Ringelements 12 bzw. deren Teilelemente verlaufen. Grundsätzlich sind die Textilbahn 16 und das obere Ringelement 14 und das untere Ringelement 12 vorzugsweise so ausgebildet, dass sie ein faltenfreies Aufspannen der Textilbahn zwischen den beiden Ringelementen garantieren. Ein weiteres "Geraderücken", Zu- bzw. Aufspannen, Faltenfreiziehen ist optional durch eine entsprechende Ausbildung der Druckstabelemente 20 und der im Folgenden noch im Detail beschriebenen Querelemente 28 möglich, die so ausgeführt werden können, dass sie zusätzlich zur Vorspannung, aufgebracht durch das untere Ringelement und das obere Ringelement, eine insbesondere weitere Ausspannung und insbesondere Vertikalaufspannung bzw. Vorspannung auf das Textilelement optional in horizontaler Richtung des Fahrradkorbs und optional orthogonal zur Textilbahn 16 einbringen. Hierzu können die Druckelemente beispielsweise nach außen gebogen ausgeführt werden. Auch können die Querelemente 28 etwas insbesondere nach außen und insbesondere aus der von Außenseiten oder der Innenseite der Ringelement aufgespannten Wandebenen hervorstehend hervorstehen.

Optional ist das Verbindungselement 42 derart ausgebildet, dass eine Längsvorspannung, insbesondere orthogonal zur Vertikalvorspannung zwischen oberem Ringelement und unterem Ringelement, und insbesondere coaxial zur Haupterstreckungsrichtung des oberen und/oder des unteren Ringelementes in die Textilbahn 16 einbringbar ist.

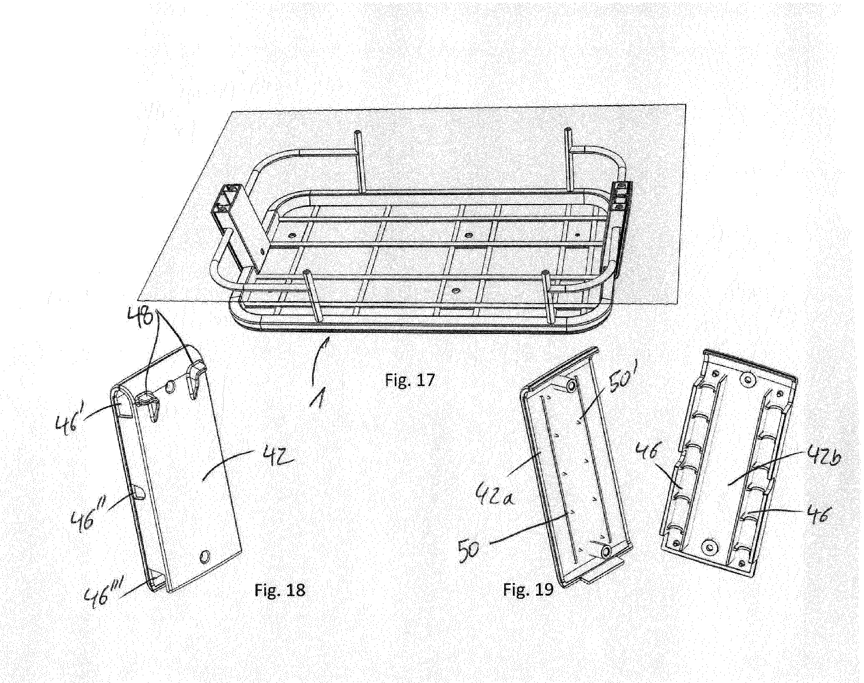

Wie in Fig. 17 dargestellt, ist die Textilbahn 16 mit einem Textilbahneinsatzelement 36 in einem Textilbahnaufnahmeelement 38 am oberen und/oder unteren Ringelement 12, 14 gehalten. Optional kann das Textilbahneinsatzelement als Keder 36 oder dergleichen verdicktes Element ausgeführt sein. Das Textilbahnaufnahmeelement kann beispielsweise eine Kederschiene oder dergleichen zum Keder komplementäre Nut 38 und insbesondere eine, wie in Fig. 4 dargestellt, umlaufende Nut sein, die insbesondere im oberen Ringelement 14 oder im unteren Ringelement 12 ausgebildet ist. Optional ist das Textilbahnaufnahmeelement 38 auf einer Seitenwand 15 bzw. einem Seitenteil des jeweiligen Ringelements 12, 14 ausgebildet. Das Textilbahneinsatzelement 36 kann an der Textilbahn verklebt, von dieser umwickelt, angenäht oder auf jede andere bekannte Art und Weise befestigt sein.

Die Befestigung zwischen Textilbahn und Ringelement 12, 14 ist optional derart ausgebildet, dass Zugkräfte, die nicht entlang einer Axialachse A_{A} (in Fig. 7 orthogonal zur Zeichenebene) des Textilbahnaufnahmeelements 38 und insbesondere des Ringelements 12, 14 wirken, abgetragen werden können. In axialer Richtung ist das Textilbahneinsatzelement und/oder das Textilbahnaufnahmeelement optional so ausgebildet, dass eine Relativbewegung der beiden Elemente zueinander möglich ist und insbesondere das Textilbahneinsatzelement insbesondere zusammen mit der Textilbahn 16 in das Textilbahnaufnahmeelement 38 einschiebbar ist. Eine solche Bewegbarkeit kann derart ausgebildet sein, dass sie solange gewährleistet ist, bis eine von der Achsialachse A_{A} abweichende Zugkraft, beispielsweise die Vorspannung, auf die Textilbahn aufgebracht wird. Optional sind die beteiligten Bauteile so ausgebildet, dass beim Aufbringen einer solchen Kraft das Textilbahneinsatzelement 36 in seinem Lagersitz im Textilbahnaufnahmeelement 38 verklemmt wird, auf Reibschluss gebracht oder dergleichen fixiert wird.

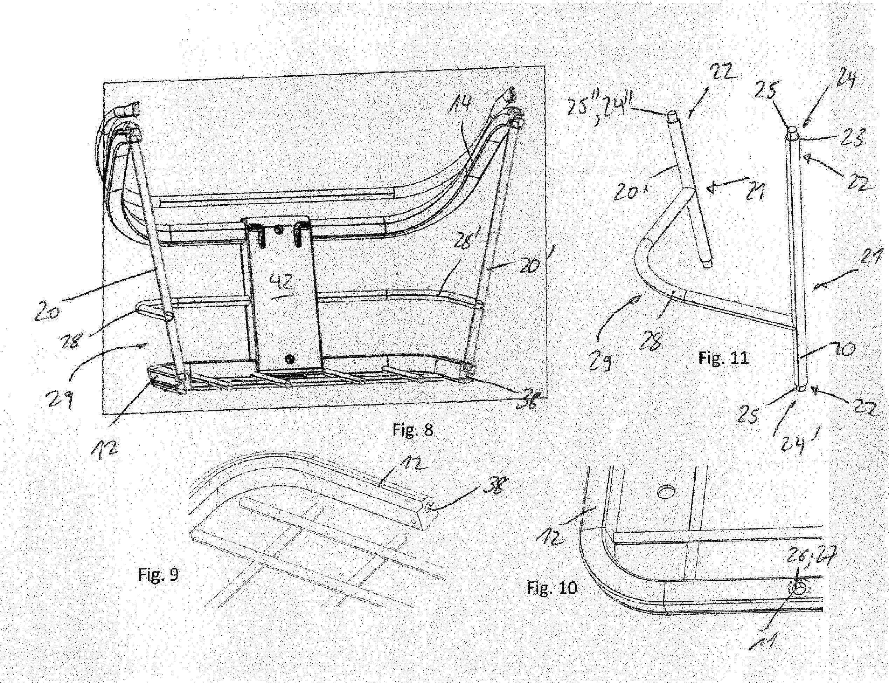

Fig. 8 zeigt einen Querschnitt durch den erfindungsgemäßen Fahrradkorb 1 und die Figs. 9 bis 11 entsprechende Detailansichten der in Fig. 8 dargestellten Bauteile. Die Figs. 9 und 10 zeigen Detailansichten des Bodenbereichs und insbesondere einen Gitterbestandteil des Bodens 6. Hier sind sämtliche Ausführungsformen für einen Boden, wie sie bei Fahrradkörben bekannt sind, ausführbar. Der Boden 6 ist über übliche Verbindungsmittel optional mit dem unteren Ringelement 12 oder einem Element im unteren Randbereich des Fahrradkorbs 1 befestigbar. Optional ist der Fahrradkorb 1 so hergestellt, dass der Boden nachträglich und insbesondere lösbar befestigt ist. Auf dieser Weise können unterschiedliche Bodenarten mit dem Fahrradkorb verbunden werden.

In Fig. 9 ist das vorbeschriebene Textilbahnaufnahmeelement 38 und insbesondere die umlaufende Nut 38 dargestellt. In Fig. 10 ist ein Gegenlagerelement 26 bzw. eine Fortsatzaufnahme 27 dargestellt, die der Aufnahme der Druckstabelemente 20, wie sie insbesondere auch in Fig. 11 im Detail dargestellt sind, dient. Eine identische Ausführung kann auch oder alternativ am oberen Ringelement vorgesehen sein.

Wie in dieser Fig. 11 dargestellt, weisen wenigstens einige Druckstabelemente 20 optional an wenigstens einem freien Ende, bei dieser Ausführungsform an gegenüberliegenden freien Enden, Lagerelemente 24 auf, die hier insbesondere je einen Fortsatz 25 umfassen. Dieser Fortsatz 25 passt in das Gegenlagerelement 26, bzw. die Fortsatzaufnahme 27 am unteren Ringelement 12 bzw. am oberen Ringelement 14. Grundsätzlich gilt im Umfang der Erfindung optional identisches für das obere Ringelement was für das untere Ringelement 12 gilt, oder umgekehrt, es sei denn, es ist explizit anders erwähnt. gilt optional für das obere Ringelement 14. Optional ist die Verbindung eine Steckverbindung und insbesondere reibschlussbehaftet, sodass eine Temporärhalterung des Druckstabelements 20 in seinem Lagersitz 49 am unteren Ringelement 12 und/oder am oberen Ringelement 14 gewährleistet ist. Das Lagerelement 24 weist bei dieser Ausführungsform einen Flansch 23 auf, der optional gegen einen Auflagerlagerbereich 11 am Ringelement ansteht und Normalkräfte, die in Druckstabelement 20 geleitet werden, in das Ringelement abträgt.

Bei dieser Ausführungsform sind wenigstens zwei Druckstabelemente zur Bildung eines statischen Rahmens 29 und hier insbesondere eines dreiaxialen aussteifenden Rahmens mit wenigstens einem Querelement 28 miteinander verbunden. Das Querelement 28 erstreckt sich zwischen den wenigstens zwei Druckstabelementen, wobei es insbesondere von freien Enden des Druckstabelementes, optional in einem Mittelteil 21 des jeweiligen Druckstabelements 20 angeordnet und insbesondere biegesteif verbunden ist. Es ist auch denkbar, eine Mehrzahl an Querelementen 28 zu verwenden. Optional ist, wie hier dargestellt, das Querelement 28 von wenigstens einem freien Ende 22 der Druckstabelemente 20 beabstandet.

Wie insbesondere in den Figs. 1 - 3 dargestellt, verlaufen die Druckstabelemente 20 optional entlang unterschiedlicher Seitenwände 8 und insbesondere Seitenwänden 8, die sich entlang ihrer Erstreckungsebenen schneiden. Dies sind beispielsweise eine Stirnseitenwand und eine Längswand des Fahrradkorbs, die hier optional über als Querelemente ausgebildete Eckelemente 28 abgerundet verbunden sind.

Wie erwähnt ist optional zudem bei den in Fig. 11 dargestellten Druckstabelementen das Querelement 28 derart ausgebildet, dass es einen biegesteifen, dreiaxial wirkenden, statischen Rahmen 29 ausbildet. Auf diese Weise ist eine Horizontalaussteifung in Längs- und Querrichtung des Fahrradkorbs 1 gewährleistet.

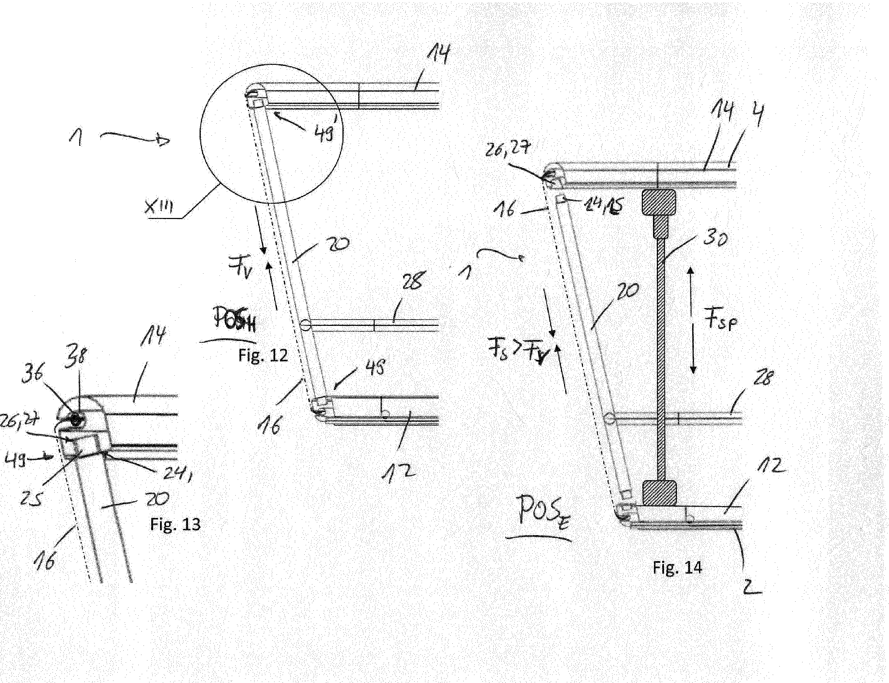

Figs. 12 bis 14 zeigen einen Detailquerschnitt des Fahrradkorbs 1 und insbesondere im Detail gem. Fig. 13 den Lagersitz eines Druckstabelements 20 im oberen Ringelement 14, umfassend das Lagerelement 24, den Fortsatz 25, das Gegenlagerelement 26 bzw. die Fortsatzaufnahme 27. In Fig. 12 dargestellt, erfolgt durch die hier gestrichelt dargestellte Textilbahn 16 eine Vorspannung Fv des oberen Ringelements 14 relativ zum unteren Ringelement 12, sodass der Druckstab 20 in seinem Lagersitz 49 gehalten und insbesondere festgeklemmt wird. Fig. 12 zeigt eine Druckstabelement-Halteposition POS_{H} und Fig. 14 eine Druckstabelement-Einsetzposition.

Wie in Fig. 14 dargestellt, ist diese Lagerung lösbar und insbesondere zum Komplementieren des Fahrradkorbs 1 ausgebildet. Dazu wird ein Spreizelement 30 zwischen dem unteren Ringelement 12 und dem oberen Ringelement 14 kraftgekoppelt, sodass die beiden Ringelemente 12, 14 relativ zueinander über eine Spreizkraft F_{SP} auseinandergedrückt werden können, sodass deren Relativabstand im Bereich deren Lagerelemente 24 bzw. Gegenlagerelemente 26 größer ist als die Länge des jeweiligen Druckstabs 20. Die nun herrschende Spreizvorspannung Fs in der Textilbahn 16 ist in der Druckstabelement-Einsetzposition POS_{E} gem. Fig. 14 grösser als die Vorspannung Fv, in der in Fig. 12 dargestellten Druckstabelement-Halteposition POS_{H}. Dieser kann, wie in Fig. 14 eingesetzt, nun zwischen oberem Ringelement 14 und unterem Ringelement 12 angeordnet werden. Nach dem Lösen des Spreizmittels 30 werden die Ringelemente 12, 14 durch die wirkende Vorspannkraft F_{S} relativ zueinander zusammengezogen, sodass das Druckstabelement 20 eingeklemmt wird.

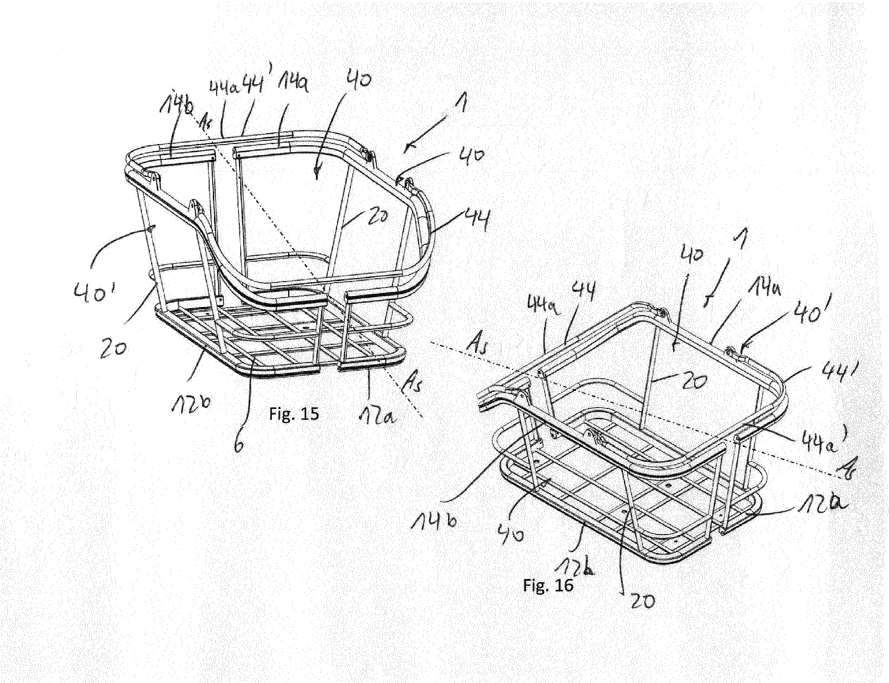

Figs. 15 und 16 zeigen eine Ausführungsform des erfindungsgemäßen Fahrradkorbs 1, wobei hier Fahrradkorb 1 aus wenigstens zwei, insbesondere sich selbst aussteifenden Halbschalen 40 besteht, die mittels wenigstens eines Verbindungselements 42, siehe beispielsweise die Figs. 1 bis 3, zur Bildung des Aufnahmeraums 40 miteinander verbunden sind. Diese Ausführungsform des Fahrradkorbs 1 mit Halbschalen 40 erleichtert das Aufspannen der Textilbahn 16 (hier insbesondere Figs. 1, 5 und 6) zwischen dem unteren Ringelement 12 und dem oberen Ringelement 14. Aufgrund der hier dargestellten abgewinkelten Ausführung des oberen Ringelements kann durch die Halbschalenausführung die Textilbahn 16 einfacher zwischen oberem Ringelement 14 und unterem Ringelement 12 und insbesondere faltenfrei aufgespannt werden. Die einzelnen Komponenten des Fahrradkorbs und insbesondere die Teilringelemente 12a, 12b bzw. 14a, 14b, die Druckstabelemente 20 und deren entsprechende gegenseitige Lagerung sind optional so ausgebildet, dass die Halbschalen für sich selbst aussteifend und als komplette Bauteile nebeneinander anordbar und über das Verbindungselement bzw. mehrere Verbindungselemente verbindbar sind.

Wie in Figs. 15 und 16 auch dargestellt, umfasst der Fahrradkorb wenigstens ein Tragebügelelement 44, der zwischen den Halbschalen 40 verläuft und diese miteinander verbindet. Das Tragebügelelement ist optional lösbar an den Halbschalen 40 ausgebildet. Das Tragebügelelement 44 verläuft hier optional mit einem Haupterstreckungsbereich 44a orthogonal zur Haupterstreckungsachse A_{S} des Fahrradkorbs 1. Er dient insbesondere der Aussteifung der zwei Halbschalen 40 relativ zueinander. Die Haupterstreckungsachse verläuft hier in Längsrichtung und optional durch den Oberrand 4, es ist auch denkbar die Haupterstreckungsachse in Längsrichtung und coplanar zum Boden 6 auszurichten. Das Tragebügelelement verbindet optional wenigstens die zwei und insbesondere zueinander axialsymmetrisch ausgebildete Teilringelemente insbesondere des oberen Ringelements und/oder des unteren Ringelements und hier beispielsweise die wenigstens zwei Halbschalen 40. Sie werden optional aufgrund des Biegesteifen Tragebügelelementes relativ zueinander ausgesteift.

Die Figs. 17 bis 22 zeigen neben einem Horizontalschnitt aus Fig. 17 des Fahrradkorbs 1 Detailansichten des Verbindungselements 42. Das Verbindungselement 42 umfasst optional wenigstens zwei Verbindungselementteile 42a, 42b, die über geeignete Verbindungsmittel, und insbesondere Schrauben (nicht dargestellt), miteinander verbindbar sind. Optional weist das Verbindungselement 42 Lagermittel 46 auf, über die Bauteile des Fahrradkorbs 1 und insbesondere Bauteile der jeweiligen Halbschalen 40 miteinander verbindbar sind. Bei dieser Ausführungsform sind die Lagermittel 46 derart ausgebildet, dass sie die insbesondere in den Figs. 5 und 6 dargestellten Druckstabelemente 20 an den Stirnseiten des Fahrradkorbs 1 festklemmen und eine optional eine biegesteife Verbindung zwischen den Halbschalen 40 und/oder zwischen den Druckstabelementen und insbesondere einen statischen Rahmen zur Verfügung stellen.

Wie in Fig. 18 dargestellt, weist optional ein Verbindungselement 42 ein Bügellager 48 auf, auf dem wenigstens ein Tragebügelelement 44 (siehe Fig. 1) gelagert werden kann. Die beiden Verbindungselementteile 42a, 42b bilden zusammen optional Lagermittel 46, in die optional nicht nur Druckstabelemente 20 aufgenommen und insbesondere festklemmbar sind, sondern auch Querelemente 28 und/oder Ringelemente 12, 14 aufgenommen bzw. festklemmbar sind.

Wie in Fig. 19 dargestellt, weist das Verbindungselement optional Klemmmittel 50 auf, die eine Festlegung wenigstens einer Textilbahn 16 (siehe Fig. 1) erlauben. Die Klemmmittel 50 können optional so ausgebildet sein, dass sie eine Vorspannung in die Textilbahn 16 eintragen und insbesondere eine horizontal entlang der Seitenwand 8 des Fahrradkorbs 1 und insbesondere orthogonal zur Vertikalachse Av verlaufende Vorspannung einbringen. Es ist denkbar, dass Klemmmittel so auszubilden, dass die in Figs. 5 und 6 dargestellten Endbereiche 17 der Textilbahn 16 miteinander verbunden und insbesondere klemmfixiert sind. Die Klemmmittel können vorzugsweise Vorsprünge aufweisen, die in die Textilbahn 16 eindringen, sie fixieren und/oder vorspannen. Es können Klemmmittel 50 vorgesehen sein, die insbesondere beim Verbinden der Verbindungselementteile 42a, 42b, eine Vorspannung auf die Textilbahn, insbesondere von einer zur Achse Av abweichenden Richtung aufbringen.

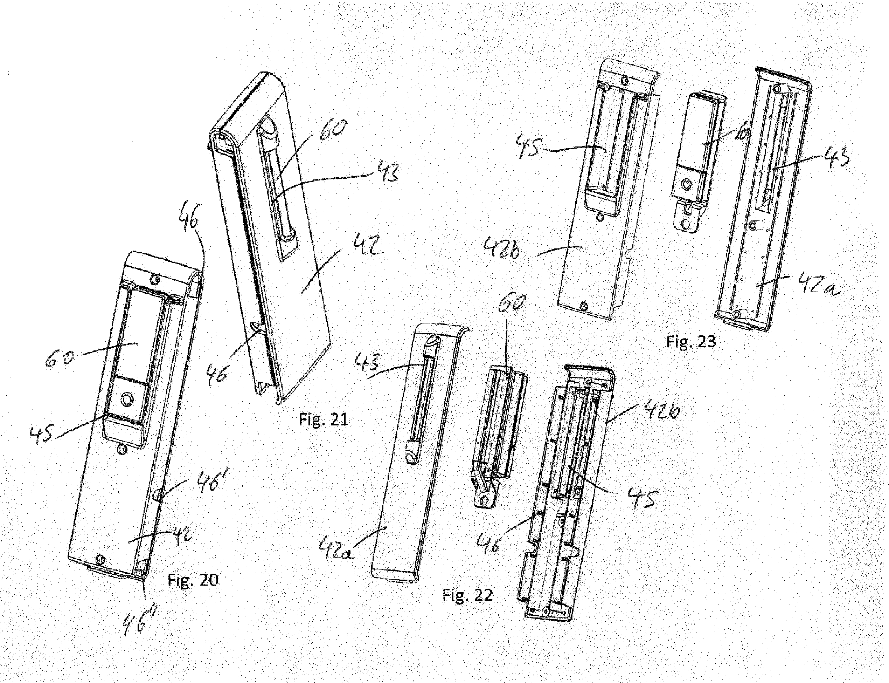

In den Figs. 20 bis 23 ist eine weitere Ausführungsform des Verbindungselements 42 dargestellt, umfassend eine Aufnahme 45, in die beispielsweise ein Zusatzelement 60, beispielsweise eine LED-Beleuchtung, ein Reflektor oder jedes andere Zusatzelement, wie es bereits hierin aufgeführt wurde, einsetzbar ist. Das Einsetzen erfolgt vorzugsweise lösbar. Das Verbindungselement 42 umfasst optional auf wenigstens einem Verbindungsteilelement 42a,b optional eine Öffnung 43, über die wenigstens ein Teil des Zusatzelements 60 von einer Außenseite des Fahrradkorbs sichtbar ist. Dies erlaubt beispielsweise das Einsetzen eines Zusatzelements vonseiten des Aufnahmeraums des Fahrradkorbs 1 und die Sichtbarkeit dieses Zusatzelements, beispielsweise einer Beleuchtung von der Außenseite des Fahrradkorbs.

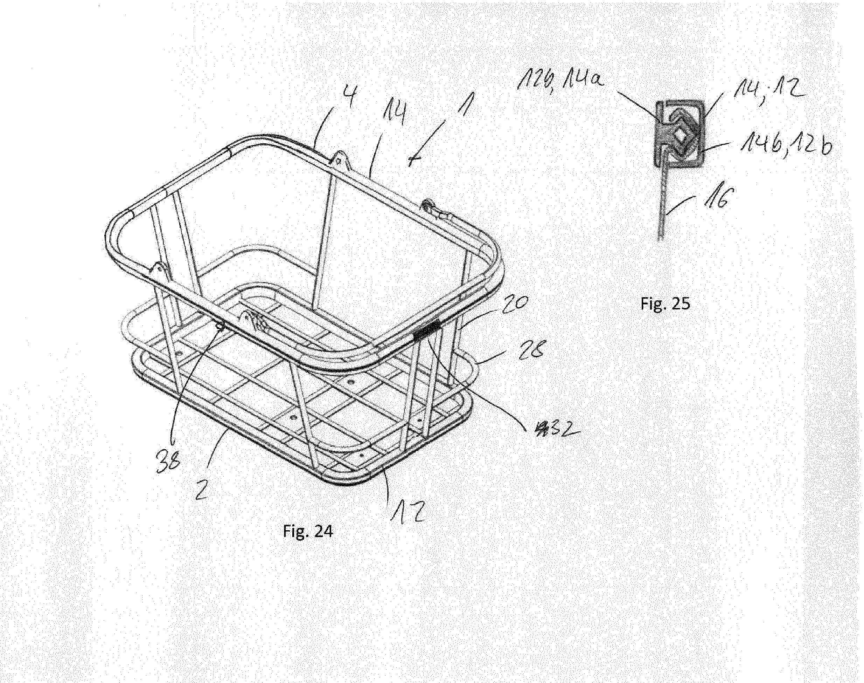

Fig. 24 zeigt eine weitere Ausführungsform des erfindungsgemäßen Fahrradkorbs, wobei hier, im Gegensatz zu der in Fig. 1 dargestellten Ausführungsform, der Oberrand 4 bzw. das obere Ringelement 14 nur geringfügig oder gar nicht abgewinkelt ist. Bei einer solchen Ausführungsform kann ebenfalls die Textilbahn über entsprechende Lagerbauteile, wie sie zuvor beschrieben wurden, zwischen oberem Ringelement 14 und unterem Ringelement 12 aufgespannt werden. Durch die fehlende Abwinklung ist ein leichtes Einschieben der Textilbahn in ihre jeweilige Lagerung an den Ringelementen 12 bis 14 möglich. Aus diesem Grund ist optional das obere Ringelement einteilig und nicht zweiteilig ausgeführt. Dies gilt insbesondere auch für den Fahrradkorb 1, der bei dieser Ausführungsform nicht aus wenigstens zwei Halbschalen 40 besteht. Zum Einsetzen der Textilbahnen in die jeweiligen Lager am oberen Ringelement 12 bzw. 14 kann optional wenigstens eine (Nut-) Öffnung 32 vorgesehen sein, in die ein Textilbahneinsatzelement 36, wie es zuvor beschrieben wurde, einsetzbar und insbesondere in das Textilbahnaufnahmeelement 38, wie es zuvor ebenfalls beschrieben wurde, einführbar ist. Es ist denkbar das obere und/oder Ringelement 12, 14 einteilig aber auch mehrteilig, beispielsweise als Strangpressprofil auszuführen.

Fig. 25 zeigt eine weitere optionale Ausführungsform einer Befestigungslösung für eine Textilbahn 16 an einem Ringelement 12, 14, beispielsweise dem unteren Ringelement 14, das hier mehrteilig ausgebildet ist und insbesondere mit einem Teilelement 14a und einem Teilelement 14b, die miteinander in eine Kraftkopplung und insbesondere Klickverbindung bringbar sind, und in dieser Verbindung die Textilbahn 16 festklemmen.

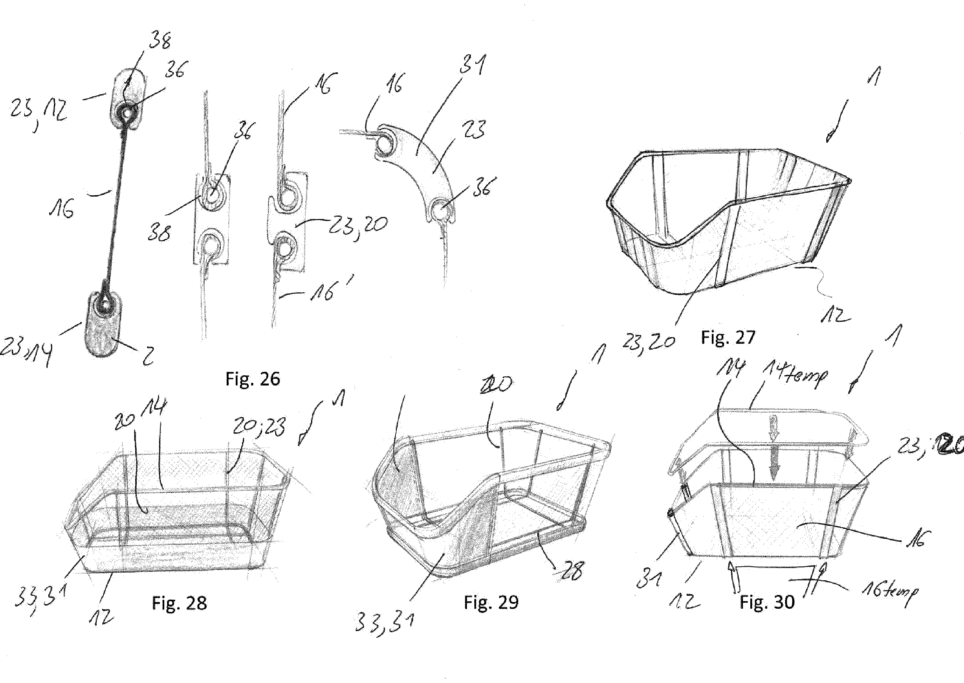

Fig. 26 zeigt ebenfalls weitere Ausführungen von Befestigungen von Textilbahnen 16 an Skeletelementen 23, insbesondere Druckstabelementen 20, Ringelementen 12, 14 eines Fahrradkorbes 1. Diese Ausführungsformen sind, wie sämtlich hier gezeigten Merkmale, Mittel und Elemente bzw. Bauteile und deren Merkmale nicht auf einen speziellen Fahrradkorb 1 festgelegt, sondern können auch mit anderen Fahrradkörben 1, insbesondere aus dem Stand der Technik bekannten Fahrradkörben ihre Verwendung finden. Sie können mit jeweils wenigstens einem Textilbahneinsatzelement 36 bspw. einem Keder versehen sein, das in wenigstens ein Textilbahnaufnahmeelement 38 bspw. eine Kederschiene einsetzbar bzw. Koppelbar ist. Bei den hier dargestellten Befestigungsmöglichkeiten und insbesondere den hier optional als zugehörig dargestellten weiteren Ausführungsformen von Fahrradkörben 1 gem. den Figs. 27 - 30 sind die Textilbahnen 14 von unten, oben oder schräg, in Bezug auf wenigstens eine Seitenwand des Fahrradkorbes einsetzbar. Dies ist beispielsweise in Fig. 30 dargestellt, wobei das Bezugszeichen 16temp eine Textilbahn vor dem Einsetzten in die Skeletelemente 23 zeigt. Selbiges gilt für das hier optional anfügbar ausgebildete obere Ringelement 14. Optional ist bei diesen Fahrradkörben ein Spannelement vorgesehen, um die Druckstabelemente in ihrem Lagersitz zu halten bzw. eine Vorspannung in die Textilbahn einzubringen. Grundsätzlich kann ein Spannelement bezüglich der Seitenwand einachsial, aber auch mehrachsial wirken. Es kann die Textilbahn in vertikaler und/oder horizontaler Richtung vorspannen. Dies ist beispielweise bei einer Ausführungsform gemäß Fig. 30 denkbar.

Optional vorgesehen ist ein Kantenschutzelement 31, das insbesondere im Bereich der Ecken des Fahrradkorbes 1 verläuft. Das Kantenschutzelement 31 kann als Querelement 28 ausgebildet sein, und umgekehrt. Es kann ebenfalls wenigstens ein Textilbahnaufnahmeelement aufweisen. Es kann zudem als Druckstabelement 20 ausgebildet sein. Selbiges gilt für die anderen dargestellten hier optional vertikal in der jeweiligen Seitenwand verlaufenden Skelettelemente 23. Es ist auch denkbar, am Fahrradkorb 1 ein Seitenwandelement 33 und insbesondere ein Scheibenelement vorzusehen, das aus einem anderen Material als der Textilbahn, beispielsweise einem Metall, einem Blech, einer Kunststofffolie oder dergleichen Platte etc. besteht.

### Bezugszeichen

- 1: Fahrradkorb
- 2: Unterrand
- 4: Oberrand
- 6: Boden
- 8: Seitenwand
- 10: Aufnahmeraum
- 12: unteres Ringelement
- 12a: Teilringelement
- 12b: Teilringelement
- 14: oberes Ringelement
- 14a: Teilringelement
- 14b: Teilringelement
- 15: Seitenwand
- 16: Textilbahn
- 17: Endbereich
- 19: Rand
- 20: Druckstabelement
- 21: Mittelteile
- 22: freies Ende
- 23: Skelettelement
- 24: Lagerelement
- 25: Fortsatz
- 26: Gegenlagerelement
- 27: Fortsatzaufnahme
- 28: Querelement
- 29: statischer Rahmen
- 30: Spreizmittel
- 31: Kantenschutzelement
- 32: Öffnung
- 33: Seitenwandelement
- 36: Textilbahneinsatzelement bzw. Keder
- 38: Textilbahnaufnahmeelement bzw. Kederschiene
- 40: Halbschalenelement
- 42: Verbindungselement
- 42a: Verbindungsteilelement
- 42b: Verbindungsteilelement
- 43: Öffnung
- 44: Tragebügelelement
- 44a: Haupterstreckungsbereich
- 45: Aufnahme
- 46: Lagermittel
- 47: Lagerklemme
- 48: Bügellager
- 49: Lagersitz
- 50: Klemmmittel
- 60: Zusatzelement
- P_{B}: Bodenfläche
- P_{D}: Deckfläche
- Fv: Vorspannung
- F_{SP}: Spreizkraft
- F_{S}: Spreizvorspannung
- A_{V}: Vertikal-Achse
- POS_{H}: Druckstabelement-Halteposition
- POS_{E}: Druckstabelement-Einsetzposition
- A_{S}: Haupterstreckungsachse
- A_{A}: Achsialachse

## Patentansprüche

1. Fahrradkorb zum Befestigen an einem Fahrrad oder dergleichen Fortbewegungsmittel, umfassend einen Unterrand (2), einen Boden (6) und eine Mehrzahl an Seitenwänden (8), die zusammen einen Aufnahmeraum (10), mit einem insbesondere freien Oberrand (4) definieren, zur Aufnahme von Gepäck, wobei der Fahrradkorb (1) folgendes umfasst:
ein oberes Ringelement (14), das wenigstens teilweise entlang des Oberrandes verläuft,
ein unteres Ringelement (12), das wenigstens teilweise entlang des Unterrandes (2) verläuft,
wenigstens eine Textilbahn (16), die unter Bildung wenigstens eines Teils der Seitenwand (8) zwischen dem oberen Ringelement (14) und dem unteren Ringelelement (12) verläuft, und
eine Mehrzahl an Druckstabelementen (20), die zwischen dem oberen Ringelement (14) und dem unteren Ringelelement verlaufen,
die Textilbahn (16) zwischen dem oberen Ringelement (14) und dem unteren Ringelelement (12) aufgespannt ist und das obere Ringelement (14) gegen das untere Ringelement (12) auf Vorspannung bringt, und
die Druckstabelemente (20) jeweils am oberen Ringelement (14) und dem unteren Ringelelement (12) lösbar gelagert und durch die Vorspannung Fv in ihrem Lagersitz gehalten sind, wobei
wenigstens einige der Druckstabelemente (20) wenigstens ein Lagerelement (24) aufweisen, das mit wenigstens einem Gegenlagerelement (26), das am oberen Ringelement (14) und/oder am unteren Ringelelement (12) ausgebildet ist, in lösbarer Kraftkopplung steht,
**dadurch gekennzeichnet, dass**
das Lagerelement (24) wenigstens einen Fortsatz (25) aufweist, und das Gegenlagerelement wenigstens eine Fortsatzaufnahme (27), oder umgekehrt, wobei der Fortsatz (25) unter Bildung einer Steckverbindung in die Fortsatzaufnahme (27) einsteckbar ist.

2. Fahrradkorb nach Anspruch 1,
**dadurch gekennzeichnet, dass**
die Textilbahn (16) wenigstens abschnittsweise aus Texteline oder einem dergleichen insbesondere gewobenem Kunststoffmaterial besteht, optional aus einem insbesondere gewobenem Kunststoffmaterial aus einer Mischung aus 60 - 80% PVC und 30% - 20% Polyester, insbesondere 65% - 75% PVC und 35% - 25% Polyester, und insbesondere aus einem 1200x1200 Material und insbesondere Gewebe oder Gelege aus 70% PVC und 30% Polyester.

3. Fahrradkorb nach Anspruch 1 oder 2,
**dadurch gekennzeichnet, dass**
die Textilbahn (16) wenigstens entlang einer Achse, und insbesondere entlang einer Vertikal-Achse Av, die in Richtung der Vorspannung Fv verläuft elastisch dehnbar ausgebildet ist.

4. Fahrradkorb nach einem der vorhergehenden Ansprüche,
**dadurch gekennzeichnet, dass**
das obere Ringelement (14) und/oder das untere Ringelement (12) wenigstens ein Textilbahnaufnahmeelement (38), und insbesondere eine Kederschiene aufweist, in die die Textilbahn (16) mit wenigstens einem insbesondere mit der Textilbahn (16) verbundenen Textilbahneinsatzelement (36), und insbesondere einem Keder, befestigbar und insbesondere darin einschiebbar ist.

5. Fahrradkorb nach einem der vorhergehenden Ansprüche,
**dadurch gekennzeichnet, dass**
wenigstens eine Mehrzahl der Druckstabelemente (20) zwischen dem oberen Ringelement (14) und dem unteren Ringelelement (12) entlang wenigstens einer Achse, und insbesondere entlang einer Vertikal-Achse Av, die in Richtung der Vorspannung Fv verläuft, gegen das obere Ringelement (14) und/oder das untere Ringelement (12) verklemmt sind.

6. Fahrradkorb nach einem der vorhergehenden Ansprüche,
**dadurch gekennzeichnet, dass**
wenigstens eines der Druckstabelemente (20) mit dem oberen Ringelement (14) und/oder mit dem unteren Ringelelement (12) über eine lösbare Steckverbindung kraftgekoppelt ist.

7. Fahrradkorb nach einem der vorhergehenden Ansprüche,
**dadurch gekennzeichnet, dass**
wenigstens eines der Lagerelemente (24) an wenigstens einem freien Ende (22) und insbesondere an zwei sich gegenüberliegenden freie Enden (22) ausgebildet ist.

8. Fahrradkorb nach einem der vorhergehenden Ansprüche,
**dadurch gekennzeichnet, dass**
die Kraftkopplung und insbesondere eine Steckverbindung zwischen Druckstabelement (20) und dem oberem Ringelement (14) und/oder dem unterem Ringelelement (12) biegesteif ausgebildet ist.

9. Fahrradkorb nach einem der vorhergehenden Ansprüche,
**dadurch gekennzeichnet, dass**
wenigstens zwei Druckstabelemente (20) unter Bildung eines statischen Rahmens (29) mit wenigstens einem Querelement (28) miteinander verbunden sind, wobei das Querelement (28) insbesondere von wenigstens einem freien Ende (22) der Druckstabelemente (20) beabstandet am jeweiligen Druckstabelement (20) angeordnet und insbesondere im Bereich eines Mittelteils (21) des jeweiligen Druckstabelementes (20) angeordnet ist, und insbesondere biegesteif mit wenigstens einem der Druckstabelemente (20) verbunden ist.

10. Fahrradkorb nach Anspruch 9,
**dadurch gekennzeichnet, dass**
wenigstens zwei Druckstabelemente (20), die entlang unterschiedlicher Seitenwände (8) verlaufen und insbesondere Seitenwänden (8) verlaufen, deren Erstreckungsebenen sich schneiden, unter Bildung eines 3-achsial aussteifenden statischen Rahmens (29) über das Querelement (28) miteinander verbunden sind.

11. Fahrradkorb nach einem der vorhergehenden Ansprüche,
**dadurch gekennzeichnet, dass**
die durch das untere Ringelement (12) umschlossene Boden-Fläche P_{B} kleiner ist als die vom oberen Ringelement (14) umschlossene Deckfläche P_{D}.

12. Fahrradkorb nach einem der vorhergehenden Ansprüche,
**dadurch gekennzeichnet, dass**
der Fahrradkorb (1) aus wenigstens zwei, insbesondere sich selbst aussteifende Halbschalen (40) besteht, die mittels wenigstens eines Verbindungselementes (42) unter Bildung des Aufnahmeraumes (10) miteinander verbunden sind.

13. Fahrradkorb nach einem der vorhergehenden Ansprüche,
**dadurch gekennzeichnet, dass** ein Verbindungselement vorgesehen ist, dass am Fahrradkorb insbesondere lösbar festlegbar und zur Aufnahme eines Zusatzelementes, beispielsweise einer Beleuchtung, Reflektormitteln, Schlossmitteln, Diebstahlsicherungsmitteln, Batteriemitteln etc. ausgebildet ist.

14. Fahrradkorb nach einem der vorhergehenden Ansprüche,
**dadurch gekennzeichnet, dass**
das obere Ringelement (14) und/oder das untere Ringelelement (12) aus einer Mehrzahl, insbesondere aus zwei Teilringelementen (14a, 14b; 12a, 12b), und insbesondere aus mehreren zueinander axialsymmetrisch ausgebildeten Teilringelementen (14a, 14b; 12a, 12b) ausgebildet sind.

15. Fahrradkorb nach einem der vorhergehenden Ansprüche,
**dadurch gekennzeichnet, dass**
der Fahrradkorb (1) wenigstens ein Tragebügelelement (44) aufweist, dass wenigstens zwei und insbesondere zueinander axialsymmetrisch ausgebildete Teilringelement (14a, 14b; 12a, 12b) des oberen Ringelementes (14) und/oder des unteren Ringelelementes (12) und/oder wenigstens zweier Halbschalen (40) verbindet.

16. Verfahren zum Herstellen eines Fahrradkorbes (1) zum Befestigen an einem Fahrrad oder dergleichen Fortbewegungsmittel, insbesondere einem Fahrradkorb nach einem der vorhergehenden Ansprüche, der Fahrradkorb (1) umfassend einen Unterrand (2), einen Boden (6) und eine Mehrzahl an Seitenwänden (8), die zusammen einen Aufnahmeraum (10) zur Aufnahme von Gepäck, mit einem insbesondere freien Oberrand (4) definieren, und weiter umfassend ein oberes Ringelement (14), das wenigstens teilweise entlang des Oberrandes verläuft, und ein unteres Ringelement (12), das wenigstens teilweise entlang des Unterrandes (2) verläuft, umfassend die folgenden Schritte:
• Befestigen wenigstens einer Textilbahn (16) an dem oberen Ringelement (14) und dem unteren Ringelement (12),
• Aufbringen einer Spreizkraft, wirkend insbesondere zwischen oberem Ringelement (14) und unterem Ringelement (12), mittels wenigstens eines Spreizmittels (30), derart, dass das obere Ringelement (14) und das untere Ringelement (12), unter aufbringen einer Spreizvorspannung Fs in die Textilbahn (16), relativ zueinander in eine Druckstabelement-Einsetzposition (POS_{E}) auseinander gedrückt werden,
• Anordnen einer Mehrzahl an Druckstabelementen (20) zwischen dem oberen Ringelement (14) und dem unteren Ringelement (12) derart, dass sie zwischen dem oberen Ringelement (14) und dem unteren Ringelelement (12) verlaufen, wobei wenigstens einige der Druckstabelemente (20) wenigstens ein Lagerelement (24) aufweisen, das mit wenigstens einem Gegenlagerelement (26), das am oberen Ringelement (14) und/oder am unteren Ringelelement (12) ausgebildet ist, in lösbarer Kraftkopplung steht, und wobei das Lagerelement (24) wenigstens einen Fortsatz (25) aufweist, und das Gegenlagerelement wenigstens eine Fortsatzaufnahme (27), oder umgekehrt, wobei der Fortsatz (25) unter Bildung einer Steckverbindung in die Fortsatzaufnahme (27) eingesteckt wird, und
• Lösen der Spreizkraft derart, dass das obere Ringelement (14) und das untere Ringelement (12) aufgrund der Spreizvorspannung F_{S} der Textilbahn (16) unter erreichen einer reduzierten Vorspannung Fv in eine Druckstabelement-Halteposition (POS_{H}) zusammengezogen werden, wobei und die Druckstabelemente (20) jeweils am oberen Ringelement (14) und dem unteren Ringelelement (12) lösbar gelagert und durch die Vorspannung in ihrem Lagersitz gehalten werden.

## Claims

1. Bicycle basket for fixing to a bicycle or to a similar transportation means, comprising a lower edge (2), a bottom (6), and a plurality of sidewalls (8), together defining an accommodating space (10), with a particularly free upper edge (4), for the storage of luggage, wherein the bicycle basket (1), comprises:
an upper ring element (14), at least partially running along the upper edge,
a lower ring element (12), at least partially running along the lower edge (2),
at least one textile web (16), present between the upper ring element (14) and the lower ring element (12), thus forming at least part of the sidewall (8), and
a plurality of compression rod elements (20), present between the upper ring element (14) and the lower ring element,
wherein the textile web (16) is stretched between the upper ring element (14) and the lower ring element (12), thereby placing the upper element (14) under a prestress against the lower ring element (12), and
wherein the compression rod elements (20) are each releasably mounted on the upper ring element (14) and on the lower ring element (12), and are kept in the mounting position by the prestress Fv, wherein
at least some of the compression rod elements (20) has at least one fixing element (24) that forms a releasable force coupling with at least one counter fixing element (26) that is formed on the upper ring element (14) and/or on the lower ring element (12),
**characterised in that**
the fixing element (24) has at least one extension (25), and **in that** the counter fixing element has at least one extension recess (27), or vice versa, wherein the extension (25) can be inserted in the extension recess (27) thereby forming a plug-in connection.

2. . Bicycle basket according to claim 1,
**characterised in that**
the textile web (16) at least partially consists of Texteline or of a similar, more specifically woven plastic material, and optionally consists of a more specifically woven plastic material that is a mixture of 60% to 80% PVC and 30% to 20% polyester, more specifically of 65% to 75% PVC and 35% to 25% polyester, and more specifically consists of a 1200 x 1200 material and more specifically consists of a tissue or felt consisting of 70% PVC and of 30% polyester.

3. . Bicycle basket according to claim 1 or 2,
**characterised in that**
the textile web (16) is elastically stretchable along at least one axis, and more specifically along a vertical axis Av that runs in the direction of the prestress Fv.

4. . Bicycle basket according to any one of the preceding claims,
**characterised in that**
the upper ring element (14) and/or the lower ring element (12) has or have at least one textile web receiving element (38), and more specifically a beading profile, in which the textile web (16), by means of at least one textile web insertion element (36) that is more specifically connected with the textile web (16), and more specifically by means of a beading, can be fixed and more specifically slidably inserted.

5. . Bicycle basket according to any one of the preceding claims,
**characterised in that**
at least one plurality of the compression rod elements (20) are tightened against the upper ring element (14) and/or against the lower ring element (12) between the upper ring element (14) and the lower ring element (12) along at least one axis, and more specifically along a vertical axis Av that runs in the direction of the prestress Fv.

6. . Bicycle basket according to any one of the preceding claims,
**characterised in that**
at least one of the compression rod elements (20) forms a releasable insertable force coupling with the upper ring element (14) and/or with the lower ring element (12).

7. . Bicycle basket according to any one of the preceding claims,
**characterised in that**
at least one of the fixing elements (24) is foreseen at at least one free end (22), and more specifically at two opposite free ends (22).

8. . Bicycle basket according to any one of the preceding claims,
**characterised in that**
the force coupling and more specifically a plug-in connection between the compression rod element (20) and the upper ring element (14) and/or the lower ring element (12) is designed to be rigid under bending loads.

9. . Bicycle basket according to any one of the preceding claims,
**characterised in that**
at least two bending rod elements (20) are mutually connected by means of a transverse element (28), thereby forming a static frame (29), wherein the transverse element (28) is arranged on the respective compression rod element (20), more specifically at a distance to at least one free end (22) of the compression rod element (20), and more specifically arranged in the area of a central part (21) of the compression rod element (20) in question, and is more specifically rigidly connected with at least one of the compression rod elements (20).

10. . Bicycle basket according to claim 9,
**characterised in that**
at least two compression rod elements (20), running along different sidewalls (8) and more specifically along sidewalls (8) of which the planes are intersecting, are mutually connected by means of the transverse element (28), thereby forming a triaxial rigidifying static frame (29).

11. . Bicycle basket according to any one of the preceding claims,
**characterised in that**
the bottom surface P_{B} that is enclosed by the lower ring element (12) is smaller than the covering surface P_{D} that is enclosed by the upper ring element (14).

12. . Bicycle basket according to any one of the preceding claims,
**characterised in that**
the bicycle basket (1) consists of at least two, more specifically self-rigidifying half-shells (40) that are connected to one another by means of at least one connecting element (42), thereby forming the accommodating space (10).

13. Bicycle basket according to any one of the preceding claims,
**characterised in that**
a connecting element is foreseen that can be fixed onto the bicycle basket, more specifically in a releasable way and for receiving an additional element, for example lighting means, reflector means, locking means, theft protection means, battery means, et cetera.

14. . Bicycle basket according to any one of the preceding claims,
**characterised in that**
the upper ring element (14) and/or the lower ring element (12) consist or consists of a plurality, more specifically of two partial ring elements (14a, 14b; 12a, 12b), and more specifically of more partial ring elements (14a, 14b; 12a, 12b) that are mutually axisymmetric.

15. Bicycle basket according to any one of the preceding claims,
**characterised in that**
the bicycle basket (1) has at least one supporting bracket element (44) that connects at least two and specifically mutually axisymmetrically formed partial ring elements (14a, 14b; 12a, 12b) of the upper ring element (14) and/or of the lower ring element (12) and/or of at least two half-shells (40).

16. . Method for manufacturing a bicycle basket (1) for fixing to a bicycle or to a similar transportation means, more specifically a bicycle basket according to any one of the preceding claims, the bicycle basket (1) comprising a lower edge (2), a bottom (6), and a plurality of sidewalls (8), together defining an accommodating space (10) with a more specifically free upper edge (4), for accommodating luggage, and further comprising an upper ring element (14) that runs at least partially along the upper edge, as well as a lower ring element (12) that runs at least partially along the lower edge (2), comprising the following steps:
• attaching at least one textile web (16) to the upper ring element (14) and to the lower ring element (12),
• applying a spreading force that is specifically active between the upper ring element (14) and the lower ring element (12), by means of at least one spreading means (30), in such a way that the upper ring element (14) and the lower ring element (12) are pushed away from one another into a compression rod element insertion position (POS_{E}), thereby introducing a spreading prestress F_{S} in the textile web (16),
• arranging a plurality of compression rod elements (20) between the upper ring element (14) and the lower ring element (12), in such a way that these compression rod elements run between the upper ring element (14) and the lower ring element (12), wherein
at least some of the compression rod elements (20) have at least one fixing element (24) that forms a releasable force coupling with at least one counter fixing element (26) that is formed on the upper ring element (14) and/or on the lower ring element (12), and wherein the fixing element (24) has at least one extension (25), and the counter fixing element (26) has at least one extension recess (27), or vice versa, wherein the extension (25) can be inserted in the extension recess (27) thereby forming a plug-in connection, and
• releasing the spreading force, in such a way that the upper ring element (14) and the lower ring element (12), thanks to the spreading prestress F_{S} in the textile web (16), are pulled together into a compression rod element holding position (POS_{H}), thereby realising a reduced prestress F_{V}, wherein the compression rod elements (20) are each releasably fixed on the upper ring element (14) and on the lower ring element (12), and are held in the holding position by means of the prestress.

## Revendications

1. Panier de vélo pour la fixation à un vélo ou un moyen de transport similaire, comprenant un bord inférieur (2), un fond (6) et une pluralité de parois latérales (8) qui définissent ensemble un espace de réception (10), avec un bord supérieur (4) en particulier libre, pour la réception de bagages, dans lequel le panier de vélo (1) comprend les éléments ci-dessous :
un élément annulaire supérieur (14) qui s'étend au moins partiellement le long du bord supérieur,
un élément annulaire inférieur (12) qui s'étend au moins partiellement le long du bord inférieur (2),
au moins une bande textile (16) qui s'étend entre l'élément annulaire supérieur (14) et l'élément annulaire inférieur (12) en formant au moins une partie de la paroi latérale (8), et
une pluralité d'éléments formant barreau de compression (20) s'étendant entre l'élément annulaire supérieur (14) et l'élément annulaire inférieur, dans lequel la bande textile (16) est tendue entre l'élément annulaire supérieur (14) et l'élément annulaire inférieur (12) et met l'élément annulaire supérieur (14) en précontrainte contre l'élément annulaire inférieur (12), et
les éléments formant barreau de compression (20) sont appuyés de manière amovible respectivement sur l'élément annulaire supérieur (14) et l'élément annulaire inférieur (12) et sont retenus dans leur siège d'appui grâce à la précontrainte F_{V}, dans lequel
au moins certains des éléments formant barreau de compression (20) présentent au moins un élément d'appui (24) qui est en couplage de force amovible avec au moins un élément de contre-appui (26) formé au niveau de l'élément annulaire supérieur (14) et/ou au niveau de l'élément annulaire inférieur (12),
**caractérisé en ce que**
l'élément d'appui (24) présente au moins un prolongement (25), et l'élément de contre-appui présente au moins un logement de prolongement (27), ou inversement, dans lequel le prolongement (25) peut être inséré dans le logement de prolongement (27) en formant une connexion enfichable.

2. Panier de vélo selon la revendication 1,
**caractérisé en ce que**
la bande textile (16) est constituée au moins par sections de textilène ou d'un matériau plastique similaire, en particulier tissé, éventuellement d'un matériau plastique en particulier tissé constitué d'un mélange de 60 à 80% de PVC et de 30% à 20% de polyester, en particulier de 65% à 75% de PVC et de 35% à 25% de polyester, et en particulier d'un matériau 1200x1200 et en particulier d'un tissu ou d'un non-tissé constitué de 70% de PVC et de 30% de polyester.

3. Panier de vélo selon la revendication 1 ou 2,
**caractérisé en ce que**
la bande textile (16) est élastiquement extensible au moins le long d'un axe, et en particulier le long d'un axe vertical A_{V} qui s'étend dans la direction de la précontrainte F_{V}.

4. Panier à vélo selon l'une quelconque des revendications précédentes,
**caractérisé en ce que**
l'élément annulaire supérieur (14) et/ou l'élément annulaire inférieur (12) présente(nt) au moins un élément de logement de bande textile (38), et en particulier un rail de bourrelet au sein duquel peut être fixée, et en particulier être insérée, la bande textile (16) munie d'au moins un élément d'insertion de bande textile (36), et en particulier d'un bourrelet, relié en particulier à la bande textile (16).

5. Panier de vélo selon l'une quelconque des revendications précédentes,
**caractérisé en ce que**
au moins une pluralité d'éléments formant barreau de pression (20) sont enserrés contre l'élément annulaire supérieur (14) et/ou l'élément annulaire inférieur (12) entre l'élément annulaire supérieur (14) et l'élément annulaire inférieur (12) le long d'au moins un axe, et en particulier le long d'un axe vertical A_{V}, qui s'étend dans la direction de la précontrainte F_{V}.

6. Panier de vélo selon l'une quelconque des revendications précédentes,
**caractérisé en ce que**
au moins un des éléments formant barreau de pression (20) est couplé à l'élément annulaire supérieur (14) et/ou à l'élément annulaire inférieur (12) par l'intermédiaire d'un connecteur enfichable amovible.

7. Panier de vélo selon l'une quelconque des revendications précédentes,
**caractérisé en ce que**
au moins un des éléments d'appui (24) est formé au niveau d'au moins une extrémité libre (22) et en particulier au niveau de deux extrémités libres (22) opposées.

8. Panier de vélo selon l'une quelconque des revendications précédentes,
**caractérisé en ce que** le couplage de force, et en particulier une connexion enfichable, est formé de manière rigide en flexion entre l'élément formant barreau de compression (20) et l'élément annulaire supérieur (14) et/ou l'élément annulaire inférieur (12).

9. Panier de vélo selon l'une quelconque des revendications précédentes,
**caractérisé en ce que**
au moins deux éléments formant barreau de compression (20) sont reliés entre eux en formant un cadre statique (29) avec au moins un élément transversal (28), dans lequel l'élément transversal (28) est agencé au niveau de l'élément formant barreau de compression (20) respectif en particulier à distance d'au moins une extrémité libre (22) des éléments formant barreau de compression (20) et est agencé en particulier dans la région d'une partie centrale (21) de l'élément formant barreau de compression (20) respectif, et est en particulier relié de manière rigide en flexion à au moins un des éléments formant barreau de compression (20).

10. Panier de vélo selon la revendication 9,
**caractérisé en ce que**
au moins deux éléments formant barreau de compression (20), s'étendant le long de parois latérales (8) différentes et en particulier de parois latérales (8) dont les plans d'extension se coupent, sont reliés entre eux par l'élément transversal (28) en formant un cadre statique (29) à rigidité triaxiale.

11. Panier de vélo selon l'une quelconque des revendications précédentes,
**caractérisé en ce que**
la surface de base P_{B} entourée par l'élément annulaire inférieur (12) est plus petite que la surface de couverture P_{D} entourée par l'élément annulaire supérieur (14).

12. Panier de vélo selon l'une quelconque des revendications précédentes,
**caractérisé en ce que**
le panier de vélo (1) est constitué d'au moins deux demi-coques (40), en particulier autorigides, qui sont reliées entre elles au moyen d'au moins un élément de liaison (42) en formant l'espace de réception (10).

13. Panier de vélo selon l'une quelconque des revendications précédentes,
**caractérisé en ce qu'**un élément de liaison est fourni, qui peut être fixé, en particulier de manière amovible, au niveau du panier de vélo et est conçu pour recevoir un élément supplémentaire, par exemple un éclairage, des moyens réflecteurs, des moyens de verrouillage, des moyens antivol, des moyens de batterie, etc.

14. Panier de vélo selon l'une quelconque des revendications précédentes,
**caractérisé en ce que**
l'élément annulaire supérieur (14) et/ou l'élément annulaire inférieur (12) sont formés à partir d'une pluralité, en particulier de deux sous-éléments annulaires (14a, 14b ; 12a, 12b), et en particulier à partir de plusieurs sous-éléments annulaires (14a, 14b ; 12a, 12b) réalisés de manière axialement symétrique les uns par rapport aux autres.

15. Panier de vélo selon l'une quelconque des revendications précédentes,
**caractérisé en ce que**
le panier de vélo (1) présente au moins un élément formant arceau de transport (44) qui relie au moins deux sous-éléments annulaires (14a, 14b ; 12a, 12b), en particulier réalisés de manière axialement symétrique l'un par rapport à l'autre, de l'élément annulaire supérieur (14) et/ou de l'élément annulaire inférieur (12) et/ou au moins deux demi-coques (40).

16. Procédé de fabrication d'un panier de vélo (1) pour la fixation à une bicyclette ou à un moyen de transport similaire, en particulier un panier de vélo selon l'une quelconque des revendications précédentes, le panier de vélo (1) comprenant un bord inférieur (2), un fond (6) et une pluralité de parois latérales (8), qui définissent ensemble un espace de réception (10), avec un bord supérieur (4) en particulier libre, pour la réception de bagages et comprenant en outre un élément annulaire supérieur (14) qui s'étend au moins partiellement le long du bord supérieur, et un élément annulaire inférieur (12) qui s'étend au moins partiellement le long du bord inférieur (2), comprenant les étapes ci-dessous consistant à :
• fixer au moins une bande textile (16) au niveau de l'élément annulaire supérieur (14) et de l'élément annulaire inférieur (12),
• appliquer une force d'écartement, agissant en particulier entre l'élément annulaire supérieur (14) et l'élément annulaire inférieur (12), au moyen d'au moins un moyen d'écartement (30), de telle manière que l'élément annulaire supérieur (14) et l'élément annulaire inférieur (12) sont écartés l'un de l'autre dans une position d'insertion d'élément formant barreau de compression (POS_{E}) en appliquant une précontrainte d'écartement F_{S} dans la bande textile (16),
• agencer une pluralité d'éléments de barreau de pression (20) entre l'élément annulaire supérieur (14) et l'élément annulaire inférieur (12) de telle manière qu'ils s'étendent entre l'élément annulaire supérieur (14) et l'élément annulaire inférieur (12), dans lequel
au moins certains des éléments formant barreau de compression (20) présentent au moins un élément d'appui (24) qui est en couplage de force amovible avec au moins un élément de contre-appui (26) formé au niveau de l'élément annulaire supérieur (14) et/ou de l'élément annulaire inférieur (12), et dans lequel l'élément d'appui (24) présente au moins un prolongement (25), et l'élément de contre-appui présente au moins un logement de prolongement (27), ou inversement, dans lequel le prolongement (25) est inséré dans le logement de prolongement (27) en formant une connexion enfichable, et
• relâcher la force d'écartement de telle manière que l'élément annulaire supérieur (14) et l'élément annulaire inférieur (12) sont serrés ensemble dans une position de retenue d'élément formant barreau de compression (POS_{H}) en raison de la précontrainte d'écartement F_{S} de la bande textile (16) tout en obtenant une précontrainte F_{V} réduite, dans lequel les éléments formant barre de compression (20) sont appuyés de manière amovible respectivement sur l'élément annulaire supérieur (14) et sur l'élément annulaire inférieur (12) et sont retenus dans leur siège d'appui grâce à la précontrainte.
